(19) 

**Europäisches Patentamt**
**European Patent Office**
**Office européen des brevets**

(11) **EP 4 656 318 A1**

(12) **EUROPEAN PATENT APPLICATION**
published in accordance with Art. 153(4) EPC

(43) Date of publication:
**03.12.2025 Bulletin 2025/49**

(21) Application number: **24780529.4**

(22) Date of filing: **27.03.2024**

(51) International Patent Classification (IPC):
*B23K 9/173* (2006.01)   *B23K 9/00* (2006.01)
*B23K 9/16* (2006.01)   *B23K 9/23* (2006.01)
*B23K 35/30* (2006.01)   *C22C 38/00* (2006.01)
*C22C 38/58* (2006.01)

(52) Cooperative Patent Classification (CPC):
**B23K 9/00; B23K 9/16; B23K 9/173; B23K 9/23;
B23K 35/30; C22C 38/00; C22C 38/58**

(86) International application number:
**PCT/JP2024/012426**

(87) International publication number:
**WO 2024/204428 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.03.2023 JP 2023056842**

(71) Applicant: **JFE Steel Corporation
Tokyo 100-0011 (JP)**

(72) Inventors:
• **WATANABE Kazufumi
Tokyo 100-0011 (JP)**
• **ISHIGAMI Atsushi
Tokyo 100-0011 (JP)**
• **KOZUKI Shohei
Tokyo 100-0011 (JP)**
• **NAGAO Ryota
Tokyo 100-0011 (JP)**

(74) Representative: **Haseltine Lake Kempner LLP
One Portwall Square
Portwall Lane
Bristol BS1 6BH (GB)**

(54) **METHOD FOR MANUFACTURING WELDED JOINT THROUGH GAS-SHIELDED ARC WELDING OF STEEL PLATE**

(57)   To provide a method for producing a narrow-gap welded joint with high strength and low-temperature impact toughness and without welding defects in a steel plate with a thickness of 50 mm or more by gas-shielded arc welding. In a method for producing a welded joint by gas-shielded arc welding according to the present invention, each layer excluding a first layer and an outermost surface layer of a weld metal has a width W of 5.0 or more and 0.4T or less (mm), a ratio A/p of a cross-sectional area A of the weld metal in a direction perpendicular to a weld line to a number of weld layers p is 120.0 mm²/layer or less, a p/T of the number of weld layers p to a thickness T is 0.40 layers/mm or less, the gas-shielded arc welding is multiple electrode welding, welding wire tips of first and second electrodes are disposed on two distinct weld lines that are parallel to each other, one of the first and second electrodes is set to positive polarity, and the other is set to reverse polarity,
a distance a between the welding wire tips of the first and second electrodes ranges from 5 to 16 mm, a straight line connecting the welding wire tips of the first and second electrodes has an angle $\alpha$ of 60 degrees or less relative to the direction perpendicular to the weld line, and a welding wire containing REM is used for the electrode with the positive polarity.

EP 4 656 318 A1

# FIG. 1

OUTERMOST SURFACE
LAYER ($L_p$)

FIRST
LAYER ($L_1$)

$5.0 \text{ (mm)} \leq Wi \text{ (EXCLUDING 1 AND p)} \leq 0.4T \text{ (mm)}$
$A/p \leq 120.0 \text{ (mm}^2\text{/LAYER)}$
$p/T \leq 0.40 \text{ (LAYER/mm)}$

**Description**

Technical Field

The present invention relates to a method for producing a welded joint by gas-shielded arc welding using a steel plate, particularly a steel plate with a thickness in the range of 50 to 160 mm.

Background Art

With the growth of the energy industry, offshore structures and offshore wind power generators are becoming larger, for example, to improve the efficiency of drilling marine resources and the power generation efficiency. Thus, with an increase in the size of structures and power generators, it is required to ensure high strength in a base portion of equipment, and therefore the use of a thick steel plate with a thickness in the range of 50 to 160 mm has been studied. Furthermore, in a cold ocean, since it is assumed that waves, drift ice, and the like collide with a thick plate used for a structure or the like, high toughness at - 40°C is also required. In the manufacture of equipment of offshore structures and offshore power generators using thick plates, it is important to improve the processing efficiency and, in particular, it is required to weld such thick plates with high efficiency.

High-heat-input welding has been proposed as one of high-efficiency welding methods for thick plates. When high-heat-input welding is used, however, it is often difficult to ensure the toughness of the weld metal and the base material heat-affected zone.

For example, Patent Literature 1 discloses a "two-electrode single-sided one-pass high-heat-input submerged arc welding method that produces a weld metal with high toughness". In the welding method disclosed in Patent Literature 1, when a steel plate with a thickness of 40 mm or more is welded in one pass on one side by two-electrode submerged arc welding, a specific flux and welding wires of specific first and second electrodes are used for a specific steel plate. The steel plate contains, on a mass percent basis, C: 0.02% to 0.2%, Si: 0.01% to 1%, Mn: 0.1% to 2.5%, Al: 0.002% to 0.1%, and N: 0.001% to 0.015%, wherein there are limits of P: 0.02% or less, S: 0.01% or less, and O: 0.01% or less, and the remainder is composed of Fe and incidental impurities. The flux is composed of, on a mass percent basis, $SiO_2$: 10% to 25%, MgO: 5% to 20%, CaO: 5% to 15%, $CaF_2$: 1% to 10%, $Al_2O_3$: 5% to 25%, $TiO_2$: 2% to 20%, Fe: 10% to 25%, and $B_2O_3$: 0.1% to 2.5%. The welding wire contains, on a mass percent basis, C: 0.02% to 0.2%, Si: 0.01% to 1%, Mn: 0.5% to 2.5%, Al: 0.002% to 0.1%, Ti: 0.005% to 0.3%, and N: 0.001% to 0.015%, wherein there are limits of P: 0.02% or less, S: 0.01% or less, and O: 0.01% or less, and the remainder is composed of Fe and incidental impurities. The welding is performed under the conditions that the welding wire of the second electrode has a diameter in the range of 6 to 8 mm, and the ratio of the cross-sectional area of the welding wire of the first electrode to the cross-sectional area of the welding wire of the second electrode ranges from 35% to 75%. Patent Literature 1 describes such a two-electrode single-sided one-pass high-heat-input submerged arc welding method that produces a weld metal with high toughness.

Patent Literature 2 discloses a "two-electrode high-heat-input submerged arc welding method". The welding method described in Patent Literature 2 is a two-electrode high-heat-input submerged arc welding method in which a specific wire and a specific flux are used for welding. The wire contains, on a mass percent basis, C: 0.02% to 0.18%, Si: 0.02% to 0.5%, Mn: 1.15% to 2.2%, Mo: 0.1% to 1.0%, Ni: 0.1% to 1.5%, and Ti: 0.005% to 0.05%, and satisfies P: 0.006% or less and S: 0.003% or less, and the remainder is composed of Fe and incidental impurities. The flux is composed of $SiO_2$: 13% to 25%, MgO: 8% to 20%, CaO: 5% to 13%, $CaF_2$: 1% to 7%, $Al_2O_3$: 9% to 23%, $TiO_2$: 3% to 11%, Fe: 11% to 25%, $B_2O_3$: 0.1% to 0.6%, Mo: 1% to 4.3%, and Ni: 1% to 4.5%. According to this welding method, even a high-heat-input submerged arc welding at a welding heat input of 500 kJ/cm or more can exhibit high weld metal mechanical performance and high weldability, significantly improve the safety of a building structure, and simultaneously significantly increase the welding efficiency.

Furthermore, narrow-gap welding has been proposed as one of high-efficiency welding methods for thick plates. The groove cross-sectional area can be decreased to reduce the welding heat input, and the toughness of the weld metal and the base material heat-affected zone can be ensured. When a thick plate is welded by narrow-gap welding, however, there is a problem that hot cracking or incomplete fusion is likely to occur.

To solve this problem, for example, Patent Literature 3 discloses a "narrow-gap submerged arc welding method". The welding method disclosed in Patent Literature 3 is a narrow-gap submerged arc welding method for a very thick steel plate in which a backing material is brought into contact with a back side of a narrow groove with a groove angle in the range of 1 to 5 degrees and a root gap in the range of 10 to 14 mm, and steel particles are sprayed in the groove from the back side of the groove to a height of 10 to 15 mm. Subsequently, a fused flux is used, which contains, on a mass percent basis relative to the total mass of the flux, a total of $Al_2O_3$, $TiO_2$, and $CaF_2$: 50% to 70% and $SiO_2$: 10% to 20%, with the remainder being CaO, MnO, BaO, $K_2O$, $Na_2O$, and incidental impurities. A narrow-gap submerged arc welding method for multilayer welding with one pass per layer is then performed. According to Patent Literature 3, a sound weld without welding defects, such as hot cracking, slag inclusion, and incomplete fusion, can be formed, and welding can be performed with high weldability, such as high slag detachability and a good bead shape, and without back chipping. Patent Literature 3 describes that such a highly efficient narrow-gap submerged arc welding method can be provided.

Furthermore, for example, Patent Literature 4 discloses a "high-efficiency welding method for a steel plate". According to Patent Literature 4, there is provided a processing step of processing an X groove in a pair of steel materials with a thickness of more than 50 mm and 100 mm or less. The method further includes a welding step of performing one-pass welding on each of the front and back sides of the pair of steel materials using a flux by multielectrode submerged arc welding with two or more electrodes and six or less electrodes. In the welding step, welding is performed in which the welding current of the first electrode is an alternating current with a waveform ratio of 60% or more and 90% or less, and the welding current of the other electrodes is an alternating current with a waveform ratio of 70% or more or a negative direct current. The flux used here contains $Al_2O_3$: 10% or more and 50% or less and $SiO_2$: 16% or more and 30% or less in mass ratio to the total mass of the flux. Furthermore, 10% or more and 60% or less of one or more of MgO, $TiO_2$, $CaF_2$, and MnO are contained in total, and MgO is limited to 40% or less, $TiO_2$ to 20% or less, $CaF_2$ to 30% or less, and MnO to 20% or less. Such a submerged arc welding method can be used to produce a weld metal with high toughness even at low temperatures, and a base portion of a wind power generation facility installed in a cold region can therefore be efficiently constructed.

A submerged arc welding method, which is a narrow-gap welding method for a steel plate as described above, requires spraying a flux in front of the weld before welding and recovering the flux after welding and requires separate management of the flux. Furthermore, the method has poor workability; for example, slag formed in the weld must be removed after welding. On the other hand, a narrow-gap gas-shielded arc welding method with high workability at the time of on-site processing has been proposed.

For example, Patent Literature 5 discloses a narrow-gap gas-shielded arc welding method for joining a thick steel material by narrow-gap multilayer welding. In the technique described in Patent Literature 5, first layer welding is multiple electrode welding with two or more electrodes, first and second electrodes are positioned along predetermined parallel weld lines, and the distance between the welding wire tips of the first and second electrodes are controlled to be 5 mm or more and 16 mm or less. Furthermore, the angle of the straight line connecting the welding wire tips of the first and second electrodes is controlled to be 45 degrees or less relative to the direction perpendicular to a weld line. Furthermore, the melt depth in the direction perpendicular to the weld line at the bottom of the thick steel material is 1.5 mm or more. Thus, even edge preparation, such as gas cutting or plasma cutting, causes no defect, and an effect of improving welding procedure efficiency can be obtained.

Citation List

Patent Literature

PTL 1: Japanese Patent No. 4673710
PTL 2: Japanese Unexamined Patent Application Publication No. 2006-212676
PTL 3: Japanese Unexamined Patent Application Publication No. 2021-126696
PTL 4: International Publication No. WO 2013/073565
PTL 5: Japanese Patent No. 6137053

Summary of Invention

Technical Problem

However, the invention of Patent Literature 1, which aims to achieve high efficiency processing by high-heat-input welding, aims to provide a welding method that can exhibit high toughness with a 2-mm V-notch Charpy absorbed energy of 70 J or more at 0°C. Thus, it is not suitable for use in a cold environment of -40°C. Also in Patent Literature 2, toughness is evaluated at 0°C, and use in a cold environment of -40°C is not assumed. Furthermore, the invention of Patent Literature 3, which aims to achieve high-efficiency processing by narrow-gap welding, does not refer to the mechanical properties of the weld metal and the base material heat-affected zone (the base material heat-affected zone is hereinafter also referred to as the "weld heat-affected zone"). Likewise, the invention of Patent Literature 4 does not refer to a low-temperature toughness value of a weld heat-affected zone and is directed to welding of a steel material with a thickness of more than 50 mm and 100 mm or less. Thus, there is no description of knowledge about welding of a thick plate with a thickness up to 160 mm as used in base equipment of offshore structures and offshore wind power generators. In the technique of the narrow-gap gas-shielded arc welding method disclosed in Patent Literature 5, multiple electrode welding with three or more electrodes may cause hot cracking in the center of the weld metal.

It is an object of the present invention to solve the problems of the related art and to provide a method for producing a narrow-gap welded joint without welding defects and with high strength and low-temperature impact toughness by gas-shielded arc welding using a steel plate with a thickness of 50 mm or more.

The term "high strength", as used herein, means that the room-temperature yield strength (0.2% proof strength) of a weld metal produced in accordance with the provision of JIS Z 3111 is 325 MPa or more, the tensile strength thereof is 520 MPa or more, and the room-temperature tensile strength of a welded joint is 520 MPa or more. The term "high low-temperature impact toughness" means that a weld metal and a weld heat-affected zone of a welded joint produced in accordance with the provision of JIS Z 3128 have absorbed energy ($vE_{-40}$) of 30 J or more in a Charpy impact test at a test temperature of -40°C.

Solution to Problem

[Underlying Knowledge Forming Basis of the Present Invention]

To achieve the above-described object, the present inventors first conducted extensive studies on the weld metal shape that enables high-efficiency sound welding of a welded joint of a steel plate with a thickness in the range of 50 to 160 mm (hereinafter also referred to as a "base material"). The weld length of an offshore structure or an offshore wind power base may exceed 1.0 km per structure in total length, and it is effective to decrease the number of layers of a weld metal for high-efficiency welding. When the ratio [p/T] of the total number of layers p to the thickness T of a weld metal is 0.40 layers/mm or less, it is defined as high efficiency. Furthermore, it has been found that when the weld area of a weld metal is 120.0 $mm^2$ or less per layer in terms of the cross-sectional area perpendicular to the weld line, the welding heat input does not become excessive, the thermal effects on the steel plate are sufficiently small, and the weld metal can have good low-temperature toughness characteristics.

As a result of intensive studies on the groove shape satisfying the above, it has been found that the above can be satisfied when the groove angle is 20 degrees or less, and the gap between base materials is 6 mm or less in single-sided welding and 10 mm or less in double-sided welding.

On the other hand, it has been found that a gap between base materials exceeding 6 mm could result in incomplete fusion while welding of the first layer, and a groove angle of less than 4 degrees tends to result in incomplete fusion and hot cracking during welding. Thus, it has been found that a groove shape that enables high-efficiency sound welding of a 50- to 160-mm steel plate is preferably such that the gap between base materials is 6 mm or less and the groove angle is 4 degrees or more and 20 degrees or less, regardless of whether single-sided welding or double-sided welding is applied.

Furthermore, the weld metal shape was examined after welding was performed on the above groove shape. As a result, it has been found that, in an arbitrary cross section in the direction perpendicular to a weld line of a weld metal, it is preferable that the weld metal be three or more layers and the weld metal of each layer excluding the first layer and the outermost surface layer have a width W (mm) of 5.0 or more and 0.4T or less (mm). Here, the first layer has a width of 5.0 mm or less depending on the gap between base materials, but this does not particularly degrade the characteristics of the weld metal. Furthermore, the outermost surface layer may be repaired to make the surface shape of the excess weld metal more beautiful or, in a case where an excess weld metal toe is a convex bead, an undercut occurs, or an overlap occurs, to correct these defects. For these reasons, the weld metals of the first layer and the outermost surface layer are unsteady portions and are therefore excluded.

[Gist of Present Invention]

The present invention has been accomplished on the basis of such findings and further studies, and the gist of the present invention is as follows:

[1] A method for producing a welded joint by gas-shielded arc welding of a steel plate, wherein

the steel plate has a thickness T (mm) in the range of 50 to 160 mm,
a weld metal is composed of three or more layers,
each layer excluding a first layer and an outermost surface layer of the weld metal has a width W (mm) of 5.0 or more and 0.4T or less (mm),
a ratio [A/p] of a cross-sectional area A ($mm^2$) of the weld metal in a direction perpendicular to a weld line to a number of weld layers p (layers) is 120.0 $mm^2$/layer or less,
a ratio [p/T] of the number of weld layers p to the thickness T is 0.40 layers/mm or less,
the gas-shielded arc welding is multiple electrode welding with three or more electrodes,
each welding wire tip of a first electrode and a second electrode is disposed on two distinct weld lines that are parallel to each other,
one of the first electrode and the second electrode is set to wire negative (positive polarity), and the other is set to wire positive (reverse polarity),
a distance a (mm) between the welding wire tips of the first electrode and the second electrode ranges from 5 to 16 mm,
a straight line connecting each welding wire tip of the first electrode and the second electrode has an angle $\alpha$ of 60 degrees or less relative to the direction perpendicular to the weld line, and
a welding wire containing 0.015% to 0.100% by mass of REM is used for the electrode set to wire negative (positive polarity).

[2] In [1],

each contact tip front end of the first electrode and the second electrode has an inclination angle $\Phi$ in the range of 0 degrees to 15 degrees toward a groove face relative to the direction perpendicular to the weld line,
a distance d (mm) between a side end portion of each welding wire tip of the first electrode and the second electrode and the groove face ranges from 0.5 to 3.0 mm,
each welding wire is a welding wire curved in advance at a radius of curvature in the range of 150 to 300 mm,
third and subsequent electrodes are disposed at a center of a groove behind the first electrode and the second electrode, and
a gas containing 60% by volume or more of $CO_2$ gas is used as a shielding gas.

[3] In [1] or [2],

the steel plate has a chemical composition containing, on a mass percent basis,
C: 0.04% to 0.14%,
Si: 0.03% to 0.70%,
Mn: 0.30% to 2.50%,
P: 0.030% or less,
S: 0.020% or less,
Nb: 0.001% to 0.100%,
Al: 0.001% to 0.100%,
O: 0.0100% or less, and
N: 0.0100% or less,
the remainder being Fe and incidental impurities,
Ceq defined by the following formula (1) and a thickness (T) satisfy

$$0.0004T + 0.25 \leq Ceq \leq 0.0004T + 0.45,$$

and a dislocation density $\rho$ at a position 1 mm below a surface of the steel plate is $4.0 \times 10^{14}$ m$^{-2}$ or less,
an average grain size at the position 1 mm below the surface of the steel plate is 15.0 $\mu$m or less, and an average grain size at a mid-thickness position is 20.0 $\mu$m or less,

$$Ceq = [C] + [Mn]/6 + ([Cr] + [Mo] + [V])/5 + ([Cu] + [Ni])/15 \tag{1}$$

wherein each element symbol in the formula (1) denotes the corresponding element content (% by mass) and is 0 in the absence of the element.

[4] In [3],

the steel plate has a chemical composition further containing, on a mass percent basis,
one or two or more selected from the group consisting of
Cu: 2.000% or less,
Ni: 2.500% or less,
Cr: 1.500% or less,
Mo: 1.000% or less,
Ti: 0.100% or less,
V: 0.300% or less,

B: 0.0100% or less,
W: 0.500% or less,
Ca: 0.0200% or less,
Mg: 0.0200% or less, and
REM: 0.0500% or less.

[5] In any one of [1] to [4],

the weld metal has a chemical composition containing, on a mass percent basis,
C: 0.04% to 0.14%,
Si: 0.03% to 0.70%,
Mn: 0.30% to 2.50%,
P: 0.030% or less,
S: 0.020% or less,
Nb: 0.001% to 0.100%,
Al: 0.001% to 0.100%,
Cu: 0.001% to 2.000%,
Ni: 0.001% to 2.500%,
Cr: 0.001% to 1.500%,
Mo: 0.001% to 1.000%,
Ti: 0.001% to 0.100%,
V: 0.001% to 0.300%,
B: 0.001% to 0.020%,
O: 0.050% or less, and
N: 0.010% or less,
the remainder being Fe and incidental impurities.

[6] In [5],

the weld metal has a chemical composition further containing, on a mass percent basis,
one or two or more selected from the group consisting of
W: 0.500% or less,
Ca: 0.0200% or less,
Mg: 0.0200% or less, and
REM: 0.0500% or less.

Advantageous Effects of Invention

The present invention can provide a welded joint produced by welding a steel plate with a thickness in the range of 50 to 160 mm, and this is a narrow-gap welded joint having a sound weld metal without welding defects, such as hot cracking and incomplete fusion, and having both high strength and high low-temperature impact toughness, and has industrially significant advantages.
A welded joint of a steel plate according to the present invention is not limited to an offshore structure or an offshore wind power generator and can also be applied to, for example, shipbuilding, a line pipe, or construction.

Brief Description of Drawings

[Fig. 1] Fig. 1 is a schematic cross-sectional view of the shape of a weld metal of a welded joint according to the present invention.
[Fig. 2] Fig. 2 is a schematic cross-sectional view of a weld metal illustrating a welding process of a welded joint according to the present invention.
[Fig. 3] Fig. 3 is a partial enlarged view of a schematic cross-sectional view of a weld metal illustrating a welding process with three electrodes.
[Fig. 4] Fig. 4 is a schematic plan view of a welding process with three electrodes.
[Fig. 5] Fig. 5 is a schematic plan view of a welding process with four electrodes.
[Fig. 6] Fig. 6 is a schematic cross-sectional view of (a) a groove shape in a V groove and (b) a groove shape in an X groove.

[Fig. 7] Fig. 7 is a schematic cross-sectional side view of a relationship between a gas supply nozzle and an electrode according to the present invention.

[Fig. 8] Fig. 8 is a schematic plan view of a relationship between a gas supply nozzle and an electrode according to the present invention.

Description of Embodiments

The present invention is described in detail below. The present invention is not limited to the following embodiments.

[Cross-Sectional Shape of Welded Joint]

First, a welded joint of a steel plate according to the present invention will be described.

A welded joint of a steel plate according to the present invention is a butt-welded joint of a steel plate with a thickness T (mm) in the range of 50 to 160 mm, in which a weld metal is composed of three or more layers, and each layer excluding the first layer and the outermost surface layer of the weld metal has a width W (mm) of 5.0 or more and 0.4T or less (mm). The ratio [A/p] of the cross-sectional area A ($mm^2$) of the weld metal in the direction perpendicular to the weld line to the number of weld layers p (layers) is 120.0 $mm^2$/layer or less, and the ratio [p/T] of the number of weld layers p to the thickness T is 0.40 layers/mm or less. In the present invention, as long as the groove shape is as described above, high-efficiency sound welding can be performed without being limited to one pass per layer.

The steel plate has a thickness T of 50 mm or more to be applied to a large structure or the like. The upper limit of the thickness T is, but not limited to, 160 mm or less due to constraints on production. The term "weld line", as used herein, refers to an imaginary line when a bead or a weld is represented as one line.

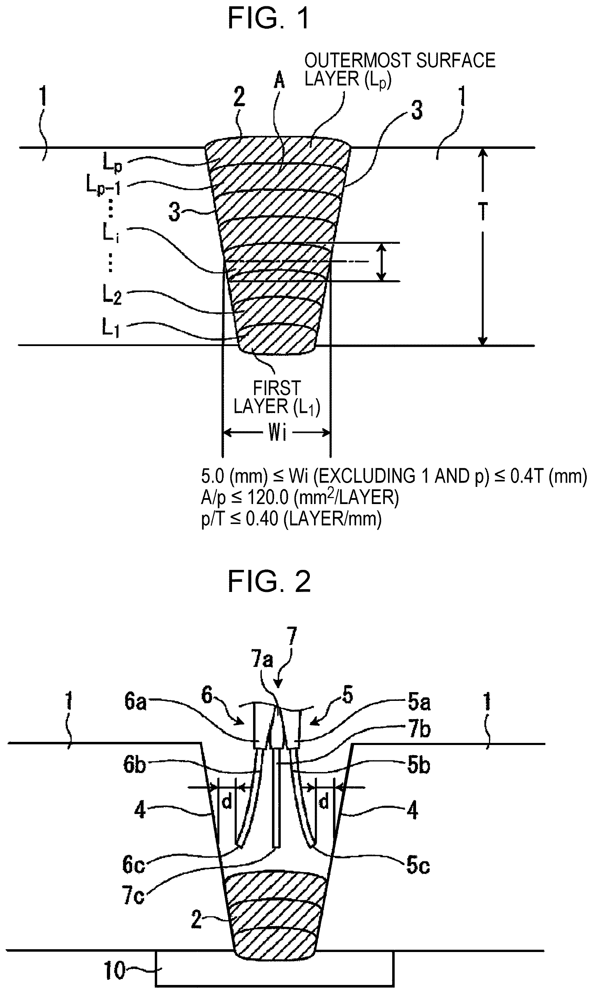

The cross-sectional shape of the welded joint will be described with reference to Fig. 1.

In the present invention, a weld metal excluding a first layer $L_1$ and an outermost surface layer $L_P$ of the weld metal, that is, the weld metal from a $L_2$ layer to an $L_{P-1}$ layer is targeted. As described above, the weld metals of the first layer and the outermost surface are unsteady portions and are therefore excluded. For example, the width $W_i$ of an i-th weld layer ($L_i$) represents the width of the weld metal at the centerline between an upper portion and a lower portion of each layer (that is, the distance between fusion lines). The width W (mm) of the weld metal was specified to be 5.0 or more and 0.4T or less (mm). That is, the width W of each of the $L_2$ layer to the $L_{P-1}$ layer excluding the first layer $L_1$ and the outermost surface layer $L_P$ of the weld metal was determined by cross-sectional macro observation or the like, and each value thereof was limited to be in the range of 5.0 mm or more and 0.4T (mm) or less. A width W of each layer below 5.0 mm results in a small groove likelihood when a steel plate is placed before being welded, a high likelihood of physical interference between a welding wire and a groove wall during welding, and a decrease in welding efficiency. This also tends to result in the formation of a pear-shaped weld bead, a significant increase in the occurrence of hot cracking, and incomplete fusion. The width W is preferably 8.0 mm or more. The reason why the upper limit of the width W is 0.4T (mm) is that, since the area of the weld metal depends on the thickness T, in the present invention intended for a steel plate with a thickness in the range of 50 to 160 mm, an upper limit of more than 0.4T (mm) results in a weld metal with an excessively large area and a decrease in welding efficiency. The width W is preferably 0.35T mm or less, more preferably 0.3T mm or less.

With respect to the cross-sectional area A ($mm^2$) of the entire weld metal in the direction perpendicular to the weld line of the weld metal, when welding is performed in p layers from $L_1$ (first layer) to $L_p$ (outermost surface layer), the cross-sectional area per layer [A/p] is preferably 120.0 $mm^2$/layer or less. This is because when the weld metal has a weld area of 120.0 $mm^2$ or less per layer, the welding heat input does not become excessive, the thermal effects on the base material are sufficiently small, and the weld metal and a weld heat-affected zone can have good low-temperature toughness characteristics. More preferably, the ratio [A/p] is 100.0 $mm^2$/layer or less. Although the lower limit of the ratio [A/p] is not particularly specified, from the perspective of welding efficiency, the ratio [A/p] is preferably 30.0 $mm^2$/layer or more, more preferably 45.0 $mm^2$/layer or more.

Furthermore, the ratio [p/T] of the number of weld layers p to the thickness T is preferably 0.40 layers/mm or less. A ratio [p/T] of more than 0.40 layers/mm results in an increase in the number of weld passes required to produce a welded joint, and a decrease in welding efficiency. Thus, the ratio [p/T] can be controlled to 0.40 layers/mm or less to perform high-efficiency welding. More preferably, the ratio [p/T] is 0.35 layers/mm or less. Although the lower limit of this ratio is not particularly specified, for the reason of welding defect resistance, the ratio [p/T] is preferably 0.10 layers/mm or more, more preferably 0.13 layers/mm or more.

[Chemical Composition of Steel Plate]

Next, a steel plate that is a base material of a welded joint according to the present invention will be described.

First, the steel plate may be a carbon steel or a low-alloy steel. Next, the chemical composition will be described, and "%" in the chemical composition described below refers to "% by mass" unless otherwise specified.

[Basic Composition of Steel Plate]

A chemical composition of a steel plate of a welded joint according to the present invention has the following basic composition.

The steel plate preferably has a chemical composition containing C: 0.04% to 0.14%, Si: 0.03% to 0.70%, Mn: 0.30% to 2.50%, P: 0.030% or less, S: 0.020% or less, Nb: 0.001% to 0.100%, Al: 0.001% to 0.100%, O: 0.0100% or less, and N: 0.0100% or less, with the remainder being Fe and incidental impurities.

The reason why the chemical composition of the steel plate is specified as described above in the present invention will be described.

[C: 0.04% to 0.14%]

C is an element that can improve the strength of a steel plate at the lowest cost and contributes to strengthening an austenite grain boundary. A C content of less than 0.04% results in a decrease in austenite grain boundary strength, hot cracking of a slab, and consequently a significant decrease in productivity. Furthermore, the strength intended in the present invention may not be achieved. On the other hand, a C content of more than 0.14% may result in a decrease in weldability and also a decrease in toughness. Thus, the C content preferably ranges from 0.04% to 0.14%. The C content more preferably ranges from 0.05% to 0.12%.

[Si: 0.03% to 0.70%]

Although Si is an element effective for deoxidization, a sufficient effect may not be achieved at a Si content of less than 0.03%. On the other hand, a Si content of more than 0.70% may result in a decrease in weldability. Thus, the Si content preferably ranges from 0.03% to 0.70%. The Si content more preferably ranges from 0.04% to 0.60%.

[Mn: 0.30% to 2.50%]

Mn is an element that can improve the hardenability and strength of steel at low cost. To produce the effects, the Mn content is preferably 0.30% or more. On the other hand, a Mn content of more than 2.50% may result in a decrease in weldability. Thus, the Mn content preferably ranges from 0.30% to 2.50%. The Mn content more preferably ranges from 0.50% to 2.20%.

[P: 0.030% or less]

P is an element that significantly embrittles a grain boundary, and a high P content may result in a steel plate with low toughness. Thus, the P content is preferably 0.030% or less. The P content is more preferably 0.025% or less. On the other hand, the P content is preferably as low as possible, and therefore the lower limit of the P content is not particularly limited and may be 0%. However, P is an element that is inevitably contained as an impurity in a steel plate, and an excessive decrease in the P content results in an increase in refining time or an increase in cost, so that the P content is preferably 0.001% or more.

[S: 0.020% or less]

S may decrease the toughness of a steel plate, and therefore the S content is preferably 0.020% or less. The S content is more preferably 0.010% or less. On the other hand, the S content is preferably as low as possible, and therefore the lower limit of the S content is not particularly limited and may be 0%. However, S is an element that is inevitably contained as an impurity in a steel plate, and an excessive decrease in the S content results in an increase in refining time or an increase in cost, so that the S content is preferably 0.0001% or more.

[Nb: 0.001% to 0.100%]

Nb is an element that suppresses recrystallization as solid solution Nb or fine precipitated NbC when strain is applied to an austenite microstructure and that has the effect of shifting the non-recrystallization temperature range to a higher temperature range. To produce the effects, the Nb content is preferably 0.001% or more. On the other hand, a Nb content of more than 0.100% may result in deterioration of weldability. Thus, the Nb content preferably ranges from 0.001% to 0.100%. The Nb content more preferably ranges from 0.005% to 0.075%. The Nb content particularly preferably ranges from 0.005% to 0.050%.

[Al: 0.001% to 0.100%]

Al is an element that is effective as a deoxidizing agent and has the effect of forming a nitride and decreasing the austenite grain size. To produce the effect, the Al content is preferably 0.001% or more. On the other hand, an Al content of more than 0.100% may result in a decrease in the cleanliness of a steel raw material or a steel plate and consequently a decrease in ductility and toughness. Thus, the Al content preferably ranges from 0.001% to 0.100%. The Al content more preferably ranges from 0.005% to 0.080% or less.

[O: 0.0100% or less]

O is an element that decreases ductility and toughness, and therefore the O content is preferably 0.0100% or less. On the other hand, the O content is preferably as low as possible, and therefore the lower limit of the O content is not particularly limited and may be 0%. However, O is an element that is inevitably contained as an impurity in a steel plate, and an excessive decrease in the O content results in an increase in refining time or an increase in cost, so that the O content is preferably 0.0005% or more.

[N: 0.0100% or less]

N is an element that decreases ductility and toughness, and therefore the N content is preferably 0.0100% or less. On the other hand, the N content is preferably as low as possible, and therefore the lower limit of the N content is not particularly limited and may be 0%. However, N is an element that is inevitably contained as an impurity in a weld metal, and therefore an excessive decrease in the N content results in an increase in refining time or an increase in cost. Thus, the N content is preferably 0.0005% or more.

[Optional Composition of Steel Plate]

A steel plate of a welded joint according to the present invention has the above-described basic composition to obtain the characteristics intended by the present invention and may contain the following optional composition as necessary in addition to the above-described basic composition for the purpose of further improving the strength and weldability (more specifically, the toughness of a weld, weldability, and the like).
One or two or more selected from the group consisting of Cu: 2.000% or less, Ni: 2.500% or less, Cr: 1.500% or less, Mo: 1.000% or less, Ti: 0.100% or less, V: 0.300% or less, B: 0.0100% or less, W: 0.500% or less, Ca: 0.0200% or less, Mg: 0.0200% or less, and REM: 0.0500% or less. Cu, Ni, Cr, Mo, Ti, V, B, W, Ca, Mg, and REM are chemical compositions that can be optionally contained, and the contents thereof may therefore be 0%.

[Cu: 2.000% or less]

Cu is an element that can improve the strength of a steel plate without great deterioration of the toughness of the steel plate. On the other hand, a Cu content of more than 2.000% may result in a hot cracking problem caused by a Cu-enriched layer formed directly under a scale. Thus, when Cu is contained, the Cu content is preferably 2.000% or less. More preferably, the Cu content ranges from 0.010% to 1.500%.

[Ni: 2.500% or less]

Ni is an element that has the effects of enhancing the hardenability of a steel plate and improving the toughness of the steel plate. On the other hand, a Ni content of more than 2.500% may result in the problem of increased production costs. Thus, when Ni is contained, the Ni content is preferably 2.500% or less. More preferably, the Ni content ranges from 0.010% to 2.000%.

[Cr: 1.500% or less]

Cr is an element that can improve the strength of a steel plate by improving the hardenability of the steel plate. On the other hand, a Cr content of more than 1.500% may result in a decrease in weldability. Thus, when Cr is contained, the Cr content is preferably 1.500% or less. More preferably, the Cr content ranges from 0.010% to 1.200%.

[Mo: 1.000% or less]

Mo is an element that can improve the strength of a steel plate by improving the hardenability of the steel plate. On the other hand, a Mo content of more than 1.000% may result in a decrease in weldability. Thus, when Mo is contained, the Mo content is preferably 1.000% or less. More preferably, the Mo content ranges from 0.010% to 0.800%.

[Ti: 0.100% or less]

Ti is an element that precipitates as TiN and thereby has the effects of pinning the movement of a grain boundary and suppressing grain growth. On the other hand, a Ti content of more than 0.100% may result in a decrease in the cleanliness of a steel plate microstructure and consequently a decrease in ductility and toughness. Thus, when Ti is contained, the Ti content is preferably 0.100% or less. More preferably, the Ti content ranges from 0.001% to 0.080%.

[V: 0.300% or less]

V is an element that can improve the hardenability of a steel plate and the strength of the steel plate due to the formation of carbonitride. On the other hand, a V content of more than 0.300% may result in a decrease in weldability. Thus, when V is contained, the V content is preferably 0.300% or less. More preferably, the V content ranges from 0.010% to 0.250%.

[B: 0.0100% or less]

B is an element that is added in a trace amount to have the effect of improving the strength of a steel plate by improving hardenability. On the other hand, a B content of more than 0.0100% may result in a decrease in weldability. Thus, when B is contained, the B content is preferably 0.0100% or less. More preferably, the B content ranges from 0.0001% to 0.0070%.

[W: 0.500% or less]

W is an element that can improve the strength of a steel plate by improving the hardenability of steel. On the other hand, a W content of more than 0.500% may result in a decrease in weldability. Thus, when W is contained, the W content is preferably 0.500% or less. More preferably, the W content ranges from 0.010% to 0.400%.

[Ca: 0.0200% or less]

Ca is an element that improves weldability by forming an oxysulfide with high stability at high temperatures. On the other hand, a Ca content of more than 0.0200% may result in a decrease in cleanliness and a decrease in the toughness of a steel plate. Thus, when Ca is contained, the Ca content is preferably 0.0200% or less. More preferably, the Ca content ranges from 0.0001% to 0.0180%.

[Mg: 0.0200% or less]

Mg is an element that improves weldability by forming an oxysulfide with high stability at high temperatures. On the other hand, at a Mg content of more than 0.0200%, the effects of adding Mg are saturated and cannot be commensurate with the Mg content, which is economically disadvantageous. Thus, when Mg is contained, the Mg content is preferably 0.0200% or less. More preferably, the Mg content ranges from 0.0001% to 0.0180%.

[REM: 0.0500% or less]

A rare-earth metal (REM) is an element that improves weldability by forming an oxysulfide with high stability at high temperatures. On the other hand, at a REM content of more than 0.0500%, the effects of adding REM are saturated and cannot be commensurate with the REM content, which is economically disadvantageous. Thus, when REM is contained, the REM content is preferably 0.0500% or less. More preferably, the REM content ranges from 0.0001% to 0.0450%.

[Composition of Remainder of Steel Plate]

In a steel plate of a welded joint according to the present invention, the remainder other than the chemical composition described above is composed of Fe and incidental impurities. Examples of the incidental impurities include H, Zn, Re, Co, Sb, and Bi, and a total content of 0.0100% or less is acceptable. Furthermore, as long as the above-described basic composition and the optional composition are satisfied, elements other than these may be contained, and such an embodiment is also included in the technical scope of the present invention.

[Ceq]

Furthermore, the chemical composition of the steel plate more preferably satisfies the following conditions.

The relationship between Ceq and the thickness T (mm) satisfies $0.0004T + 0.25 \leq Ceq \leq 0.0004T + 0.45$.

Ceq is defined by the following formula (1) and is a measure of hardenability due to elements contained.

$$Ceq = [C] + [Mn]/6 + ([Cr] + [Mo] + [V])/5 + ([Cu] + [Ni])/15 \tag{1}$$

Each element symbol in the formula (1) denotes the corresponding element content (% by mass) and is 0 in the absence of the element.

To form a high-strength microstructure desired in the present invention, it is necessary to control the cooling rate depending on the thickness T of a steel plate and the amount of alloy to be added depending on the thickness T, and required strength cannot be achieved at Ceq of less than (0.0004T + 0.25). On the other hand, Ceq of more than (0.0004T + 0.45) results in excessively high strength at a steel plate surface, which has a higher cooling rate than the mid-thickness position, and results in a decrease in low-temperature impact toughness. Thus, $0.0004T + 0.25 \leq Ceq \leq 0.0004T + 0.45$ is preferred. $0.0004T + 0.27 \leq Ceq \leq 0.0004T + 0.43$ is more preferred.

[Characteristics of Steel Plate]

The characteristics of a steel plate used for a welded joint according to the present invention will be described below.

The dislocation density $\rho$ (m$^{-2}$) at a position 1 mm below a steel plate surface is preferably $4.0 \times 10^{14}$ m$^{-2}$ or less. The dislocation density $\rho$ (m$^{-2}$) refers to a dislocation length per unit volume in a metal crystal. The position is defined at a position 1 mm below a surface of a base material (that is, "a position 1 mm below a steel plate surface") from the perspective of the bending workability of the steel plate. The bending workability of the steel plate depends on the ductility of the surface layer microstructure of the steel plate. An increase in the dislocation density of the surface layer microstructure due to working strain during hot rolling results in a decrease in the deformation limit of the surface layer microstructure and a decrease in the bending workability. Thus, the dislocation density at the position 1 mm below the steel plate surface is $4.0 \times 10^{14}$ m$^{-2}$ or less. In general, a steel microstructure inevitably contains a dislocation, and therefore it takes a very high production cost to make the dislocation density less than $1.0 \times 10^{11}$ m$^{-2}$. Thus, the dislocation density is preferably $1.0 \times 10^{11}$ m$^{-2}$ or more, more preferably $3.0 \times 10^{14}$ m$^{-2}$ or less.

Furthermore, it is preferable that the average grain size at the position 1 mm below the surface of the base material be 15.0 $\mu$m or less, and the average grain size at a mid-thickness position of the base material be 20.0 $\mu$m or less.

The average grain size refers to the average of all crystal grains at the position 1 mm below the steel plate surface and at the mid-thickness position, where the crystal grains are defined as regions surrounded by a boundary with a misorientation of 15 degrees or more, and can be measured by a method described later in Examples. The toughness of the steel plate surface layer increases as the grain size of the surface layer microstructure of the steel plate decreases. To produce the effect, the average grain size at the position 1 mm below the steel plate surface is preferably 15.0 $\mu$m or less. More preferably, the average grain size at the position 1 mm below the steel plate surface is 13.0 $\mu$m or less. Furthermore, the toughness at the mid-thickness position increases as the grain size of the steel microstructure at the mid-thickness position decreases. To produce the effect, the average grain size at the mid-thickness position is preferably 20.0 $\mu$m or less. More preferably, the average grain size at the mid-thickness position is 15.0 $\mu$m or less. The phrase "1 mm below a steel plate surface", as used herein, refers to a position at a depth of 1 mm from the steel plate surface in the thickness direction. The phrase "the mid-thickness position", as used herein, refers to a position at half the thickness of the steel plate.

[Method for Producing Steel Plate]

Next, a method for producing the steel plate will be described.

A steel plate to which the present invention is applied can be produced by heating, hot rolling, and cooling a slab (steel raw material) with the above-described chemical composition. The cooling may be followed by an optional tempering step. Various preferred conditions will be described below. However, the present invention is not limited to a specific production method as long as the above-described steps are included.

In the following description of the production method, the temperature expressed in "°C" is the surface temperature of a slab or a steel plate unless otherwise specified. The surface temperature can be measured, for example, with a radiation thermometer or the like.

In the present invention, the method for melting a slab is not particularly limited, and any known melting method using a converter, an electric arc furnace, a vacuum melting furnace, or the like is suitable. A slab is produced in desired dimensions, for example, by a continuous casting process. A molten steel may be further subjected to secondary refining, such as ladle refining.

- Heating Conditions

As described above, a slab thus produced is preferably heated in the temperature range of 1000°C to 1200°C. When the heating temperature of a slab is less than 1000°C, coarse NbC precipitated in the slab during slab casting is not redissolved and remains. Consequently, it is impossible to produce the effect of increasing the temperature in the non-recrystallization temperature range by solid solution Nb or fine NbC reprecipitated during hot rolling. This reduces the grain refining effect of controlled rolling and decreases the toughness. On the other hand, when the heating temperature of the slab is more than 1200°C, the grain growth of austenite increases the grain size at the beginning of hot rolling and accordingly increases the grain size of the final microstructure after the hot rolling and decreases the toughness. Thus, the heating temperature of the slab preferably ranges from 1000°C to 1200°C. The heating temperature of the slab is more preferably 1030°C or more, still more preferably 1170°C or less.

- Hot Rolling Conditions

The heated slab is then preferably hot rolled. As described above, in the present invention, the dislocation density and the average grain size at the position 1 mm below the steel plate surface and the average grain size at the mid-thickness position are important. To obtain various characteristics, rolling is preferably performed under the following hot rolling conditions.

A temperature range of ($8250[Nb] + 770°C$) to an $Ar_3$ temperature at the position 1 mm below the steel plate surface or at the mid-thickness position is referred to as a non-recrystallization temperature range. The temperature at the mid-thickness position can be determined, for example, by measurement with a thermocouple attached at the mid-thickness position or by calculating the temperature distribution in a cross section of the steel plate by heat transfer analysis and correcting the result by the surface temperature of the steel plate. [Nb] described above denotes the corresponding element content (% by mass) in the chemical composition of the steel plate.

First, the steel plate temperature at the position 1 mm below the steel plate surface is once decreased to the $Ar_3$ temperature or lower and is then increased above the $Ac_3$ temperature by recuperation. Rolling reduction is then performed at a rolling reduction ratio of 25% or more at the position 1 mm below the steel plate surface in the temperature range in which the steel plate temperature at the position 1 mm below the steel plate surface ranges from ($8250[Nb] + 770°C$) to the $Ar_3$ temperature. Rolling reduction is then performed at a total rolling reduction ratio of 15% or less in the temperature range in which the steel plate temperature at the position 1 mm below the steel plate surface is below the $Ar_3$ temperature.

The steel plate surface layer is temporarily cooled to the $Ar_3$ temperature or lower during the hot rolling of the heated slab to transform austenite into a low-temperature-formed microstructure, such as ferrite. Furthermore, the steel plate surface layer is heated to the $Ac_3$ temperature or higher by the subsequent recuperation in order for retransformation to an austenite microstructure and is thereby formed into fine austenite.

The cooling in this hot-rolling step is performed by any method, for example, by water cooling or air cooling, provided that the temperature can be controlled to a predetermined temperature. For example, cooling to the $Ar_3$ temperature or lower is performed by water cooling, and the residence time at the $Ar_3$ temperature or lower at the position 1 mm below the steel plate surface is preferably 5 seconds or more and preferably 300 seconds or less. The recuperation after the cooling is performed by holding the steel plate in the atmosphere, and the holding time is preferably 30 seconds or more and preferably 600 seconds or less.

Rolling reduction is then performed at a rolling reduction ratio of 25% or more in the temperature range of ($8250[Nb] + 770°C$) to the $Ar_3$ temperature in which the steel plate surface layer is in the non-recrystallization temperature range to introduce working strain into austenite in the steel plate surface layer. This acts as a transformation nucleus in the final cooling and forms a fine microstructure with high toughness. The rolling reduction ratio in this temperature range is preferably 30% or more. From the perspective of rolling efficiency, the rolling reduction ratio in this temperature range is preferably 80% or less, more preferably 70% or less.

The upper limit of the number of passes in this temperature range is not particularly limited. For example, a plurality of passes are possible, provided that the conditions for the rolling reduction ratio described above are satisfied.

**EP 4 656 318 A1**

When the total rolling reduction ratio at a steel plate surface layer temperature in the temperature range below the $Ar_3$ temperature is more than 15%, working strain is introduced into a ferrite microstructure or a pearlite microstructure completely transformed in the steel plate surface layer and reduces the ductility and bending workability. Thus, the total rolling reduction ratio at a steel plate surface layer temperature in the temperature range below the $Ar_3$ temperature is preferably 15% or less. The total rolling reduction ratio in this temperature range is more preferably 6% or less.

The microstructure controlling under the rolling conditions of the steel plate surface layer described above can form a steel plate surface layer with a microstructure that simultaneously has a low dislocation density, a small grain size, and high bending workability and toughness.

The mid-thickness position is then preferably subjected to rolling reduction at a total rolling reduction ratio of 25% or more in the temperature range in which the steel plate temperature at the mid-thickness position is $(8250[Nb] + 770°C)$ or lower and the $Ar_3$ temperature or higher.

During the hot rolling under the rolling conditions of the steel plate surface layer described above, the heated slab is subjected to 25% or more rolling reduction in the temperature range of $(8250[Nb] + 770°C)$ to the $Ar_3$ temperature in which the mid-thickness position is in the non-recrystallization temperature range. This introduces working strain into austenite at the mid-thickness position. This acts as a transformation nucleus in the final cooling and forms a fine microstructure with high toughness. Thus, the total rolling reduction ratio in the temperature range in which the temperature at the mid-thickness position is $(8250[Nb] + 770°C)$ or lower is preferably 25% or more. More preferably, the total rolling reduction ratio in this temperature range is 30% or more. From the perspective of rolling efficiency, the total rolling reduction ratio in this temperature range is preferably 80% or less, more preferably 70% or less.

Below the $Ar_3$ temperature at the mid-thickness position, working strain is introduced into ferrite formed and decreases the toughness. Thus, the mid-thickness position is preferably the $Ar_3$ temperature or higher.

In the present invention, the temperature ranges in two types of rolling, "rolling of the steel plate surface layer" and "rolling of the mid-thickness position", may overlap under the rolling conditions described above. In such a case, it is sufficient if the rolling reduction in the overlapping temperature range is integrated as each rolling reduction of "the steel plate surface layer" and "the mid-thickness position", and the integrated rolling reduction is within the rolling conditions.

Here, the total rolling reduction ratio at the steel plate surface layer and the mid-thickness position is calculated by the total rolling reduction ratio = $(r0 - r1)/r0 \times 100$ (%). r0 denotes the thickness at the start of the first rolling, and r1 denotes the thickness after the final rolling. The $Ar_3$ temperature and the $Ac_3$ temperature can be determined in a Formaster test or the like.

The microstructure controlling under the rolling conditions at the mid-thickness position described above can form a microstructure with a small grain size and high toughness at the center position of the steel plate.

- Cooling Conditions

After the above-described hot rolling, the steel plate is cooled. the steel plate is cooled at an average cooling rate of $2500 \times t^{-1.7}$°C/s or more in the temperature range of 700°C to 550°C at the mid-thickness position, wherein t denotes the thickness [mm] of the steel plate. The cooling method is, for example, water cooling by which water is ejected from a nozzle at a high flow rate, or the like. In the present invention, a cooling operation (treatment) is preferably performed on both sides of the steel plate so that both sides of the steel plate are cooled under the same conditions.

When the average cooling rate in the temperature range of 700°C to 550°C at the mid-thickness position after the hot rolling is below $2500 \times t^{-1.7}$°C/s, the strength required in the present invention cannot be achieved due to an insufficient cooling rate in the temperature range in which austenite is transformed to a low-temperature transformation microstructure. Furthermore, the toughness decreases due to the formation of coarse ferrite. Thus, the average cooling rate in the temperature range of 700°C to 550°C at the mid-thickness position is preferably $2500 \times t^{-1.7}$°C/S or more.

In the present invention, if necessary, the cooling can be followed by tempering to further improve the strength and toughness. In such a case, after the cooling, the steel plate is tempered at a tempering temperature of 650°C or less. At a tempering temperature of more than 650°C, the required strength may not be achieved due to significant softening. Thus, the tempering temperature is preferably 650°C or less. On the other hand, the lower limit of the tempering temperature is preferably, but not limited to, 200°C or more. The tempering time can be appropriately adjusted. The term "tempering temperature", as used herein, refers to the temperature of the surface of the steel plate.

[Chemical Composition of Weld Metal]

Next, the chemical composition of a weld metal of a welded joint according to the present invention will be described. "%" in the chemical composition refers to "% by mass" unless otherwise specified.

14

[Basic Composition of Weld Metal]

The chemical composition of a weld metal of a welded joint according to the present invention has the following basic composition.

The weld metal preferably has a chemical composition containing C: 0.04% to 0.14%, Si: 0.03% to 0.70%, Mn: 0.30% to 2.50%, P: 0.030% or less, S: 0.020% or less, Nb: 0.001% to 0.100%, Al: 0.001% to 0.100%, Cu: 0.001% to 2.000%, Ni: 0.001% to 2.500%, Cr: 0.001% to 1.500%, Mo: 0.001% to 1.000%, Ti: 0.001% to 0.100%, V: 0.001% to 0.300%, B: 0.001% to 0.020%, O: 0.050% or less, and N: 0.010% or less, with the remainder being Fe and incidental impurities.

Thus, the reason why the chemical composition of the weld metal is specified as described above in the present invention will be described.

Each composition can be added to (contained in) the weld metal from either a steel plate or a wire as a welding material.

[C: 0.04% to 0.14%]

C is an element with an action of increasing the strength of the weld metal by solid-solution strengthening and is also an element contributing to strengthening of an austenite grain boundary. A C content of less than 0.04% may result in a decrease in austenite grain boundary strength, and the strength intended in the present invention may not be achieved. On the other hand, a C content of more than 0.14% may result in promotion of the occurrence of weld cracking and a decrease in the low-temperature impact toughness of the weld metal. Thus, the C content preferably ranges from 0.04% to 0.14%. The C content more preferably ranges from 0.05% to 0.12%.

[Si: 0.03% to 0.70%]

Si acts as a deoxidizing agent and has effects of increasing the viscosity of the weld metal and stably maintaining the bead shape. To produce such an effect, the Si content is preferably 0.03% or more. However, a Si content of more than 0.70% may result in a decrease in the low-temperature impact toughness of the weld metal. Furthermore, Si sometimes segregates during solidification, forms a liquid phase at a solidification cell interface, and decreases the weld crack resistance. Thus, the Si content preferably ranges from 0.03% to 0.70%. The Si content more preferably ranges from 0.04% to 0.60%.

[Mn: 0.30% to 2.50%]

Mn is an element that can improve the hardenability and strength of the weld metal at low cost. To produce the effects, the Mn content is preferably 0.30% or more. On the other hand, a Mn content of more than 2.50% may result in segregation of Mn during solidification, induction of hot cracking, and a decrease in weldability. Thus, the Mn content preferably ranges from 0.30% to 2.50%. The Mn content more preferably ranges from 0.50% to 2.20%.

[P: 0.030% or less]

P is an element with a large effect of embrittling a grain boundary, and a high P content may result in a decrease in the low-temperature impact toughness of the weld metal, segregation at an interface during solidification, and induction of hot cracking. Thus, the P content is preferably 0.030% or less. The P content is more preferably 0.025% or less. On the other hand, the P content is preferably as low as possible, and therefore the lower limit of the P content is not particularly limited and may be 0%. However, P is an element that is inevitably contained as an impurity in the weld metal, and an excessive decrease in the P content results in an increase in cost, so that the P content is preferably 0.001% or more.

[S: 0.020% or less]

S may decrease the low-temperature impact toughness of the weld metal, segregate at an interface during solidification, and induce hot cracking, so that the S content is preferably 0.020% or less. The S content is more preferably 0.010% or less. On the other hand, the S content is preferably as low as possible, and therefore the lower limit of the S content is not particularly limited and may be 0%. However, S is an element that is inevitably contained as an impurity in the weld metal, and an excessive decrease in the S content results in an increase in cost, so that the S content is preferably 0.0001% or more.

[Nb: 0.001% to 0.100%]

Nb is a carbide-forming element and is an element that precipitates carbide and contributes to an improvement in the strength of the weld metal. Furthermore, Nb precipitates carbide at a solidification cell interface of the weld metal and contributes to suppression of the occurrence of hot cracking. To produce the effects, the Nb content is preferably 0.001% or more. On the other hand, a Nb content of more than 0.100% may result in coarsening of carbide, cause a starting point of fracture, and result in a decrease in cryogenic impact toughness. Thus, the Nb content preferably ranges from 0.001% to 0.100%. The Nb content more preferably ranges from 0.005% to 0.075%. The Nb content particularly preferably ranges from 0.005% to 0.050%.

[Al: 0.001% to 0.100%]

Al acts as a deoxidizing agent and has important effects of increasing the viscosity of molten metal and stably maintaining the bead shape. To produce the effects, the Al content is preferably 0.001% or more. On the other hand, an Al content of more than 0.100% may result in a decrease in the cleanliness of the weld metal and consequently a decrease in ductility and toughness. This may also result in the weld metal with an excessively high viscosity and conversely an increase in defects, such as incomplete fusion, because the bead does not spread. Thus, the Al content preferably ranges from 0.001% to 0.100%. The Al content more preferably ranges from 0.005% to 0.080%.

[Cu: 0.001% to 2.000%]

Cu is an element that can improve the strength of the weld metal without significant deterioration of the toughness of the weld metal. To produce the effect, the Cu content is preferably 0.001% or more. On the other hand, a high Cu content of more than 2.000% may result in segregation during solidification and induction of hot cracking. Thus, when Cu is contained, the Cu content is preferably 2.000% or less. More preferably, the Cu content ranges from 0.005% to 1.500%. The Cu content still more preferably ranges from 0.005% to 1.000%, still more preferably 0.005% to 0.500%.

[Ni: 0.001% to 2.500%]

Ni is an element that has the effects of enhancing the hardenability of the weld metal and improving the toughness of the weld metal. To produce the effects, the Ni content is preferably 0.001% or more. However, Ni is an expensive element, and a Ni content of more than 2.500% is economically disadvantageous. Thus, when Ni is contained, the Ni content is preferably 2.500% or less. More preferably, the Ni content ranges from 0.010% to 2.000%. The Ni content still more preferably ranges from 0.010% to 1.500%, still more preferably 0.010% to 1.000%.

[Cr: 0.001% to 1.500%]

Cr is an element that can improve the strength of the weld metal by improving the hardenability of the weld metal. To produce the effect, the Cr content is preferably 0.001% or more. On the other hand, a Cr content of more than 1.500% may result in a decrease in weldability. This may also result in the formation of Cr carbide and a decrease in low-temperature impact toughness. Thus, when Cr is contained, the Cr content is preferably 1.500% or less. More preferably, the Cr content ranges from 0.010% to 1.200%.

[Mo: 0.001% to 1.000%]

Mo is an element that can improve the strength of the weld metal by improving the hardenability of the weld metal. To produce the effect, the Mo content is preferably 0.001% or more. On the other hand, a Mo content of more than 1.000% may result in a decrease in weldability. Thus, when Mo is contained, the Mo content is preferably 1.000% or less. More preferably, the Mo content ranges from 0.010% to 0.800%.

[Ti: 0.001% to 0.100%]

Ti is an element that can precipitate as fine carbonitride in the weld metal and improve the strength of the weld metal. To produce the effect, the Ti content is preferably 0.001% or more. On the other hand, a Ti content of more than 0.100% may result in a decrease in the cleanliness of the weld metal microstructure and consequently a decrease in ductility and toughness. Thus, when Ti is contained, the Ti content is preferably 0.100% or less. More preferably, the Ti content ranges from 0.005% to 0.080%.

[V: 0.001% to 0.300%]

V is an element that can improve the hardenability of the weld metal and improve the strength of the weld metal by the formation of carbonitride. To produce the effects, the V content is preferably 0.001% or more. On the other hand, a V content of more than 0.300% may result in a decrease in weldability. Thus, when V is contained, the V content is preferably 0.300% or less. More preferably, the V content ranges from 0.005% to 0.250%. The V content still more preferably ranges from 0.005% to 0.150%, still more preferably 0.005% to 0.100%.

[B: 0.001% to 0.020%]

B is an element that is added in a trace amount to have the effect of improving the strength of the weld metal by improving hardenability. To produce the effect, the B content is preferably 0.001% or more. On the other hand, a B content of more than 0.020% may result in a decrease in weldability. Thus, when B is contained, the B content is preferably 0.020% or less. More preferably, the B content ranges from 0.005% to 0.018%.

[O: 0.050% or less]

O is an element that decreases ductility and toughness, and therefore the O content is preferably 0.050% or less. On the other hand, the O content is preferably as low as possible, and therefore the lower limit of the O content is not particularly limited and may be 0%. However, O is an element that is inevitably contained as an impurity in the weld metal, and an excessive decrease in the O content results in an increase in cost, so that the O content is preferably 0.0005% or more.

[N: 0.010% or less]

N is an element that decreases ductility and toughness, and therefore the N content is preferably 0.010% or less. On the other hand, the N content is preferably as low as possible, and therefore the lower limit of the N content is not particularly limited and may be 0%. However, N is an element that is inevitably contained as an impurity in the weld metal, and therefore an excessive decrease in the N content results in an increase in cost, so that the N content is preferably 0.0005% or more.

[Optional Composition of Weld Metal]

Although a weld metal according to the present invention with the above-described basic composition can have the characteristics intended by the present invention, for the purpose of further improving the strength and weldability (more specifically, the toughness of a weld, weldability, and the like), a weld metal according to the present invention can contain the following optional composition as necessary in addition to the above-described basic composition.

One or two or more selected from the group consisting of W: 0.500% or less, Ca: 0.0200% or less, Mg: 0.0200% or less, and REM: 0.0500% or less. W, Ca, Mg, and REM are compositions that can be optionally contained, and the contents thereof may therefore be 0%.

[W: 0.500% or less]

W is an element that can improve the strength of the weld metal by improving the hardenability of the weld metal. On the other hand, a W content of more than 0.500% may result in a decrease in weldability. Thus, when W is contained, the W content is preferably 0.500% or less. The W content is preferably 0.001% or more. More preferably, the W content ranges from 0.001% to 0.300%.

[Ca: 0.0200% or less]

Ca is an element that improves weldability by forming an oxysulfide with high stability at high temperatures. On the other hand, a Ca content of more than 0.0200% may result in a decrease in cleanliness and a decrease in the toughness of the weld metal. Thus, when Ca is contained, the Ca content is preferably 0.0200% or less. More preferably, the Ca content ranges from 0.0001% to 0.0150%. Still more preferably, the Ca content ranges from 0.0001% to 0.0100%.

[Mg: 0.0200% or less]

Mg is an element that improves weldability by forming an oxysulfide with high stability at high temperatures. On the other hand, at a Mg content of more than 0.0200%, the effects of adding Mg are saturated and cannot be commensurate with the Mg content, which is economically disadvantageous. Thus, when Mg is contained, the Mg content is preferably 0.0200% or less. More preferably, the Mg content ranges from 0.0001% to 0.0180%. Still more preferably, the Mg content ranges from 0.0001% to 0.0150%.

[REM: 0.0500% or less]

A rare-earth metal (REM) is an element that improves weldability by forming an oxysulfide with high stability at high temperatures. On the other hand, at a REM content of more than 0.0500%, the effects of adding REM are saturated and cannot be commensurate with the REM content, which is economically disadvantageous. Thus, when REM is contained, the REM content is preferably 0.0500% or less. More preferably, the REM content ranges from 0.0001% to 0.0450%.

[Remainder Composition of Weld Metal]

In a weld metal according to the present invention, the remainder other than the above chemical composition is composed of Fe and incidental impurities. The incidental impurities are components that are incorporated from a welding wire, a steel plate, the ambient atmosphere, and the like in a welding process, and refer to components that are not intentionally contained. Examples of the incidental impurities include H, Zn, Re, Co, Sb, and Bi, and a total content of 0.0100% or less is acceptable. Furthermore, as long as the above-described basic composition and the optional composition are satisfied, elements other than these may be contained, and such an embodiment is also included in the technical scope of the present invention.

[Mechanical Properties of Weld Metal]

Preferred mechanical properties of a welded joint according to the present invention will be described below.
In the weld metal with the above-described chemical composition, it is preferable that the room-temperature yield strength (0.2% proof strength) in a tensile test of a weld metal produced in accordance with the provision of JIS Z 3111 be 325 MPa or more and the tensile strength thereof be 520 MPa or more.
The welded joint preferably has a room-temperature tensile strength of 520 MPa or more. The term "room temperature", as used herein, refers to 25.0°C.
Furthermore, the absorbed energy ($vE_{-40}$) of a weld metal and a weld heat-affected zone of a welded joint produced in accordance with the provision of JIS Z 3128 in a V-notch Charpy impact test at a test temperature of -40°C is preferably 30 J or more. This is because less than 30 J may result in a decrease in the toughness of a structure including the joint and a higher likelihood of fracture.

[Method for Producing Welded Joint]

Next, a method for producing a welded joint according to the present invention will be described. More specifically, a method for producing a welded joint formed by gas-shielded arc welding of the above-described steel plate will be described.
First, a steel plate with the above-described chemical composition and with a thickness in the range of 50 to 160 mm is prepared. Edge preparation is then performed such that the prepared steel plates form a predetermined groove shape. The groove shape to be formed is, for example, but not limited to, a V groove, a single bevel groove, an X groove, a double bevel groove, or the like, which is commonly used for a welded structure.
The steel plates subjected to the edge preparation are then welded to each other to form a multilayer weld metal with three or more layers, thereby forming a welded joint. When welding is performed with one layer or two layers of weld metal, the heat at the time of welding does not spread uniformly in the groove and induces a welding defect. Furthermore, the number of passes per layer may be, but is not limited to, one pass or two or more passes. However, more than four passes results in remarkable deterioration of welding efficiency, and therefore the number of passes is preferably four or less. From the perspective of welding efficiency, the number of passes is more preferably two or less.

[Gas-Shielded Arc Welding Method]

A welding method used in the present invention is a multielectrode gas-shielded arc welding method for stably producing a narrow-gap welded joint having a weld metal without welding defects and having high strength and low-temperature impact toughness.
As the welding conditions of a gas-shielded arc welding method according to the present invention, it is necessary to appropriately control the welding conditions described below with reference to the drawings.

[Welding Conditions (Basic Conditions and Optional Conditions)]

(1) Basic Welding Conditions

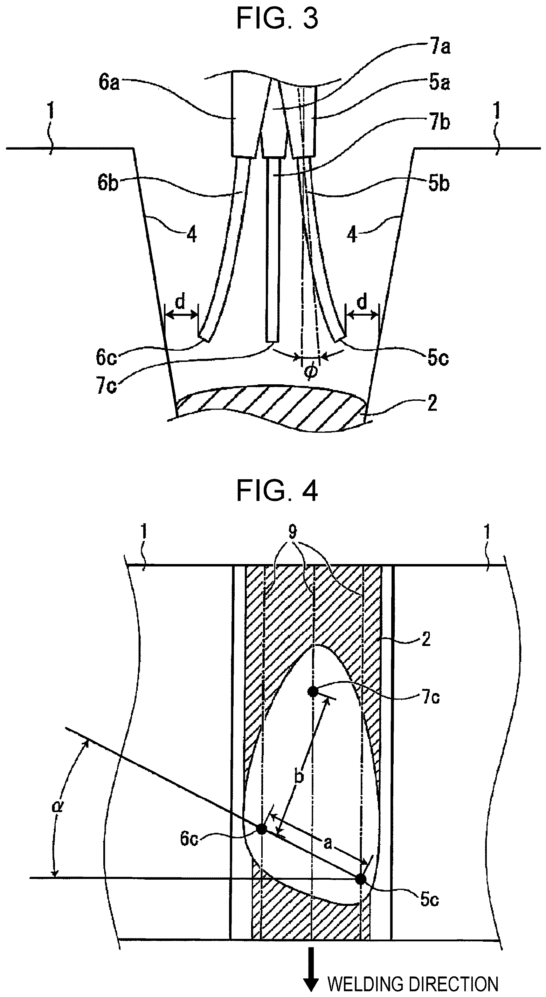

(a) Multilayer welding with three or more electrodes is performed.
(b) Welding wire tips of the first electrode and the second electrode are arranged on different parallel weld lines. (See Fig. 4)
(c) One of the first electrode and the second electrode is set to wire negative (positive polarity), and the other is set to wire positive (reverse polarity).
(d) The distance a (mm) between the welding wire tips of the first electrode and the second electrode ranges from 5 to 16 mm. (See Fig. 4)
(e) An angle $\alpha$ of a straight line connecting each welding wire tip of the first electrode and the second electrode relative to the direction perpendicular to the weld line is 60 degrees or less. (See Fig. 4)
(f) A welding wire containing 0.015% to 0.100% by mass of REM is used for the electrode set to wire negative (positive polarity).

(2) Optional Welding Conditions

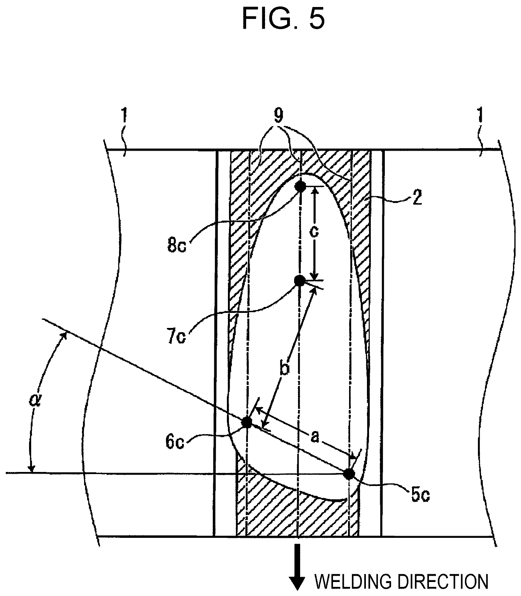

(g) The inclination angle $\Phi$ toward a groove face of each contact tip front end of the first electrode and the second electrode relative to the direction perpendicular to the weld line ranges from 0 degrees to 15 degrees. (See Fig. 3)
(h) The distance d (mm) between a side end portion of each welding wire tip of the first electrode and the second electrode and the groove face ranges from 0.5 to 3.0 mm. (See Figs. 2 and 3)
(i) Each welding wire is a welding wire curved in advance at a radius of curvature in the range of 150 to 300 mm.
(j) Third and subsequent electrodes are disposed at a center of the groove behind the first electrode and the second electrode. (See Figs. 4 and 5)
(k) A gas containing 60% by volume or more of $CO_2$ gas is used as a shielding gas.

[Individual Welding Conditions]

The above welding conditions will be individually described in more detail.

(a) Multilayer Welding with Three or More Electrodes

In narrow-gap multilayer welding with one pass per layer, one electrode tends to result in concentration of heat on the center of a groove, insufficient melting of the steel material on the groove face, and a defect caused by incomplete fusion (cold lap), by spatters deposited on the groove face, or by slag inclusion. In particular, in the first layer welding, the steel material has a low temperature, the melt depth is small, and therefore a defect caused by incomplete fusion is likely to occur. From the perspective of improving the welding procedure efficiency, multiple electrode welding with three or more electrodes is advantageous. Four or less electrodes are preferred from the perspective of welding procedure efficiency. Three electrodes are most preferred.

(b) Arrangement of Electrodes

Welding wire tips of the first electrode and the second electrode are arranged on different parallel weld lines. Fig. 4 illustrates an arrangement example of the welding wire tips for three electrodes, and Fig. 5 illustrates an arrangement example of the welding wire tips for four electrodes. As illustrated in these figures, a welding wire tip 5c of a first electrode 5 and a welding wire tip 6c of a second electrode 6 are arranged on different parallel weld lines 9. This spreads an arc emitted from each welding wire of the first electrode and the second electrode in the width direction of the weld metal to be formed.

(c) Polarity of Electrode

One of the first electrode and the second electrode is set to wire negative (positive polarity), and the other is set to wire positive (reverse polarity). When the first electrode and the second electrode have the same polarity, for example, when both the first electrode and the second electrode are set to wire positive, their arcs are directed inward by an attractive electromagnetic force, and heat is concentrated on the center of the groove, resulting in insufficient melting on the groove face. However, when the first electrode and the second electrode have different polarities and the welding wire tips described in the above (b) are arranged on different parallel weld lines, the magnetic fields due to the welding currents generate strong outward electromagnetic force, and the arcs repel each other. This can result in a sufficient melt depth on the groove face. From this result, in the present invention, one of the polarities of the first electrode and the second electrode is set to wire negative (positive polarity), and the other is set to wire positive (reverse polarity).

(d) Distance a between First and Second Electrode Tips: 5 to 16 mm

It is necessary to control the distance a between welding wire tips 5b and 6b fed from contact tips 5a and 6a at welding torch tips of the first electrode 5 and the second electrode 6 (hereinafter also referred to simply as "the distance between the first and second electrode tips") to be in the range of 5 to 16 mm. As illustrated in Fig. 4, the distance a between the welding wire tips 5b and 6b refers to the distance between the centers of the welding wire tips 5c and 6c in each electrode.

When the distance a between the first and second electrode tips is less than 5 mm, an electric current (electron) flows between the electrodes and decreases the heat of the arc itself, resulting in insufficient melting on the groove face. On the other hand, when the distance a is more than 16 mm, the outward electromagnetic force between the electrodes decreases in inverse proportion to the distance, and arc repulsive force to overcome inward electromagnetic force generated by an electric current flowing through the groove face cannot be obtained, so that the arcs turn inward toward each other and heat is concentrated in the center of the groove. This results in insufficient melting on the groove face.

Furthermore, although suppression of welding defects caused by deposition of spatters to the groove face is a problem in narrow-gap welding, the welding conditions (b), (c), and (d) are controlled to absorb the spatters by the respective molten metals. This can suppress the deposition of spatters to the groove face and can form a sound weld.

Thus, the distance a between the first and second electrode tips is controlled in the range of 5 to 16 mm, but to achieve a deeper and stable melt depth of the groove face by stronger repulsion of the arc, the distance a between the first and second electrode tips is preferably controlled in the range of 5 to 8 mm.

(e) First and Second Electrode Tips Arrangement Angle $\alpha$: 60 Degrees or Less

In a narrow-gap gas-shielded arc welding method according to the present invention, repulsion of arc is utilized to ensure melting on a groove face. Here, in Fig. 4, an angle $\alpha$ of a straight line connecting the welding wire tips 5c and 6c of the first electrode 5 and the second electrode 6 relative to the direction perpendicular to the weld lines 9 (hereinafter also referred to simply as "a first and second electrode tips arrangement angle") will be described. An angle $\alpha$ of more than 60 degrees results in insufficient repulsive force of the arc and insufficient melting on the groove face. Thus, the angle $\alpha$ is limited to 60 degrees or less. The angle $\alpha$ is preferably 45 degrees or less. The angle $\alpha$ may be 0 degrees (that is, parallel to the direction perpendicular to the weld lines). More preferably, the angle $\alpha$ is 25 degrees or more.

(f) REM Content of Welding Wire Used for Positive Electrode

A rare-earth element (REM) is an element that is effective in refining an inclusion during steelmaking and during casting and improving the toughness of the weld metal during welding. Furthermore, when a welding wire containing REM is fed to the electrode set to wire negative (positive polarity) for welding, it is possible to miniaturize a droplet and stabilize the transfer. This fine droplet transfer can suppress the formation of spatters and enables stable gas-shielded arc welding even with positive polarity. Thus, in the present invention, a steel wire containing 0.015% to 0.100% by mass of a rare-earth element (REM) is fed to the electrode with the positive polarity. An element other than the rare-earth elements (REMs) is contained in an appropriate amount that is typically contained according to the grade (steel grade) of a welding wire, as defined in JIS Z 3312. When the rare-earth element (REM) content is less than 0.015% by mass, the above-described miniaturization of a droplet and stabilization of transfer cannot be achieved. On the other hand, a REM content of more than 0.100% by mass results in cracking during a wire production process, which makes it difficult to produce a welding wire. Thus, the rare-earth element (REM) content is limited to the range of 0.015% to 0.100% by mass. The REM content preferably ranges from 0.025% to 0.050% by mass.

A welding wire for gas-shielded arc welding is typically produced with a diameter in the range of 0.6 to 2.0 mm, and for welding at the same electric current, a smaller wire diameter generally results in a higher deposition rate due to Joule heat. Thus, to realize high-efficiency welding, it is preferable to select a relatively small wire diameter. On the other hand, a wire with a too small diameter is softened by Joule heat and makes welding unstable. Thus, a welding wire to be used preferably has a diameter in the range of 1.0 to 1.6 mm.

The above-described welding conditions are basic welding conditions in gas-shielded arc welding according to the present invention, and a narrow-gap welded joint with high strength and low-temperature impact toughness without welding defects can be produced by welding under the above-described conditions.

Furthermore, in the present invention, a narrow-gap welded joint with high strength and low-temperature impact toughness without welding defects can be more stably produced by satisfying optional welding conditions described below in addition to the basic welding conditions described above.

(g) Inclination Angle Φ of Contact Tip: 0 Degrees to 15 Degrees

An arc has directivity and tends to be oriented in the direction in which a welding wire tip of an electrode points. To effectively utilize the directivity of the arc for the melting on the groove face, it is advantageous to direct the direction of a welding wire tip toward the groove face, and the direction of the welding wire tip changes greatly with the feed angle of a welding wire fed from a contact tip at an electrode tip. Thus, as illustrated in Fig. 3, the feed angles of the welding wires 5b and 6b of the first electrode 5 and the second electrode 6 relative to a bottom portion of a weld metal 2 are the same as the inclinations of the front ends of the contact tips 5a and 6a of each electrode. Thus, the feed angle of a welding wire fed from each contact tip relative to a weld metal bottom portion can be controlled by adjusting the inclination angle Φ of the contact tip front end toward a groove face 4 (hereinafter also referred to as "the inclination angle Φ of the contact tip"). The term "weld metal bottom portion", as used herein, refers to a bottom portion of each weld layer of the weld metal and refers to the vicinity of the boundary with the previous weld layer.

When the inclination angle Φ of each contact tip of the first electrode and the second electrode is less than 0 degrees (that is, in a case where the contact tip is inclined to the side opposite to the groove face), the electric current flows through a path with a smaller resistance. Consequently, an arc climbs up along a wire that serves as an electrode (which is referred to as "arc climbing"), making it difficult to maintain melting on a target groove face, particularly a bottom portion. On the other hand, when the inclination angle Φ of the contact tip is more than 15 degrees, the arc is directed too much toward the groove face, forming a convex weld bead, resulting in insufficient melting by the arc in welding after the first layer, so that a welding defect is likely to occur. Thus, the inclination angle Φ of the contact tip preferably ranges from 0 degrees to 15 degrees. More preferably, the inclination angle Φ of the contact tip ranges from 5 degrees to 12 degrees.

(h) Distance d between Welding Wire Tip End Portion and Groove Face: 0.5 to 3.0 mm

To achieve a deeper and stable melt depth at a weld metal bottom portion, as illustrated in Figs. 2 and 3, the distance d between side end portions of the welding wire tips 5c and 6c of the first electrode 5 and the second electrode 6 and the groove face 4 of the steel plate preferably ranges from 0.5 to 3.0 mm. When the distance d is less than 0.5 mm, the arc is generated not between the wire and the weld metal bottom portion but between the wire and the groove face, and the previous weld layer and the groove face cannot be efficiently melted at the weld metal bottom portion.

On the other hand, when the distance d is more than 3.0 mm, the arc is separated from the groove face, and the groove face cannot be efficiently melted. The distance d more preferably ranges from 0.5 to 2.0 mm, still more preferably 0.5 to 1.0 mm. The phrase "a side end portion of a welding wire tip", as used herein, refers to a side end portion on the side closest to a groove face of a steel plate to be melted by each electrode, and the distance d refers to the shortest distance between the side end portion and the groove face 4.

(i) Radius of Curvature of Welding Wire To Be Fed: 150 to 300 mm

In the present invention, to control the feed angle (Φ) of the welding wires 5b and 6b fed from the contact tips at the welding torch tips of the first electrode 5 and the second electrode 6, the contact tips 5a and 6a with front end portions inclined toward the groove face side as illustrated in Fig. 3 are used. At this time, the welding wires 5b and 6b pass through contact tips with front end portions inclined to the groove face side, and to facilitate smoother feeding, it is preferable to curve the welding wires in advance using a so-called three-point roller or the like (not shown).

The radius of curvature in the case of curving in advance preferably ranges from 150 to 300 mm. A radius of curvature of less than 150 mm results in high wire feed resistance, unstable feeding of a welding wire, and makes it difficult to maintain the arc. On the other hand, when a welding wire has a radius of curvature of more than 300 mm, there is no effect in reducing the wire feed resistance in a state where a contact tip front end is curved, so that the welding wire cannot be stably fed, and it becomes difficult to maintain the arc. Thus, a welding wire to be fed to the contact tips of the first electrode and the second electrode preferably has a radius of curvature in the range of 150 to 300 mm. More preferably, the welding wire has a radius of curvature in the range of 175 to 275 mm.

(j) Arrangement of Third and Subsequent Electrodes

To avoid the risk of hot cracking, as illustrated in Figs. 4 and 5, it is effective to arrange welding wire tips (7c and 8c) of third and subsequent electrodes at the center of the groove behind the welding wire tips (5c and 6c) of the first electrode and the second electrode. This can further decrease the number of stacked layers and greatly reduce the risk of stacking faults in multilayer welding.

The distance b between the welding wire tip 6c of the second electrode and the welding wire tip 7c of the third electrode preferably ranges from 10 to 100 mm, more preferably 10 to 60 mm, still more preferably 10 to 40 mm, most preferably 10 to 25 mm. Furthermore, the distance c between the welding wire tip 7c of the third electrode and the welding wire tip 8c of the fourth electrode also preferably ranges from 10 to 100 mm, more preferably 10 to 60 mm, still more preferably 10 to 40 mm, most preferably 10 to 25 mm.

The polarity of the third and subsequent electrodes may be, but is not limited to, either wire negative (positive polarity) or wire positive (reverse polarity).

(k) Shielding Gas Composition

The oxygen content of the weld metal is also greatly affected by the shielding gas composition, and it is therefore preferable to use a shielding gas composition containing 60% by volume or more of $CO_2$ gas, with the remainder being an inert gas, such as Ar. It is more preferably a gas containing 100% by volume of $CO_2$ gas.

A nozzle for supplying the shielding gas is preferably disposed as described below.

A shielding gas supply nozzle 11 is disposed in front of the first electrode 5 in the welding direction in the groove to secure a good shielding property in gas-shielded arc welding, which is an object of the present invention, to suppress entrainment of nitrogen in the atmosphere, and to reduce deterioration of the low-temperature toughness of the weld metal and occurrence of a welding defect.

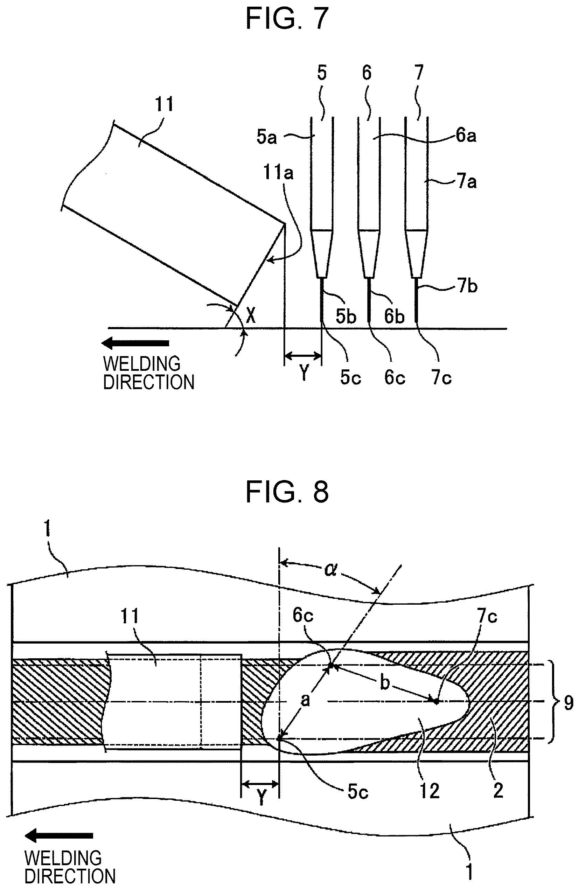

This will be described in detail below with reference to Figs. 7 and 8. Fig. 7 is a schematic cross-sectional side view of a positional relationship between a shielding gas supply nozzle and electrodes, and Fig. 8 is a plan view of the same positional relationship as in Fig. 7 as viewed from above. These figures illustrate an example of three-electrode welding in which the first electrode 5, the second electrode 6, and a third electrode 7 are arranged. The shielding gas supply nozzle 11 is disposed in front of the first electrode 5 in the welding direction, and a gas outlet 11a from which the shielding gas is discharged is directed to the first electrode 5. At the time of welding, arc welding is performed while the shielding gas supply nozzle 11 moves in the welding direction in conjunction with the three electrodes and supplies the shielding gas.

The gas outlet 11a preferably has a cross-sectional area N in the range of 100 $mm^2$ to 350 $mm^2$.

A cross-sectional area N of the gas outlet 11a below 100 $mm^2$ results in a decrease in the gas blowing area and an insufficient shielding property. On the other hand, a cross-sectional area N of the gas outlet 11a exceeding 350 $mm^2$ results in dispersion of the gas to a portion other than the groove bottom portion and an insufficient shielding property. Thus, the gas outlet 11a preferably has a cross-sectional area N in the range of 100 $mm^2$ to 350 $mm^2$. The cross-sectional area N more preferably ranges from 125 $mm^2$ to 300 $mm^2$.

The supply flow rate Q of the shielding gas preferably ranges from 35 L/min to 70 L/min.

A supply flow rate Q of the shielding gas below 35 L/min results in an insufficient amount of the gas supplied to a molten pool 12 and deterioration of the shielding property. On the other hand, a supply flow rate Q of the shielding gas exceeding 70 L/min results in a higher likelihood of an excessive shielding gas flow velocity and the occurrence of a welding defect. Thus, the shielding gas preferably has a supply flow rate Q in the range of 35 L/min to 70 L/min. The supply flow rate Q more preferably ranges from 40 L/min to 65 L/min. Although the flow velocity of the shielding gas changes depending on the combination of the supply flow rate Q of the shielding gas and the cross-sectional area N of the gas outlet, the flow velocity preferably ranges from 2 m/s to 7 m/s.

The gas outlet has a tip with the following appropriate cross-sectional shape.

Although Figs. 7 and 8 illustrate only the tip portion of the shielding gas supply nozzle 11, the tip of the gas outlet 11a may have any cross-sectional shape. However, a nozzle with a larger cross-sectional area can be inserted into the groove when the cross-sectional shape of the tip is rectangular rather than circular, and the gas outlet tip therefore preferably has a rectangular cross-sectional shape.

An angle X formed by a cross section of the gas outlet 11a and the groove bottom portion to be welded preferably ranges from 40 degrees to 80 degrees. (See Fig. 7)

When the angle X formed by the cross section of the gas outlet 11a and the groove bottom portion to be welded is less than 40 degrees, the shielding gas does not sufficiently reach the third electrode 7, resulting in an insufficient shielding property. On the other hand, an angle X of more than 80 degrees results in dispersion of the gas to a portion other than the groove bottom portion and an insufficient shielding property. Thus, the angle X formed by the cross section of the gas outlet 11a and the groove bottom portion to be welded preferably ranges from 40 degrees to 80 degrees. The angle X more preferably ranges from 45 degrees to 75 degrees.

A distance Y between the tip of the gas outlet 11a and the welding wire tip 5c of the first electrode 5 is preferably 40 mm or less (see Figs. 7 and 8). The distance between the gas outlet 11a and the electrode is also effective for the shielding property. That is, when the distance Y between the tip of the gas outlet 11a (more specifically, the portion closest to the electrode) and the welding wire tip 5c of the first electrode 5 is more than 40 mm, the shielding gas does not sufficiently reach the entire electrode, and the gas is dispersed to a portion other than the groove bottom portion, resulting in an insufficient shielding property. Thus, the distance Y is preferably 40 mm or less. The distance Y more preferably ranges from 5 mm to 35 mm.

[Other Welding Conditions]

Conditions other than the above-described welding conditions are not particularly specified. For example, the welding current may range from 280 to 360 A, the welding voltage may range from 32 to 37 V, the welding speed may range from 30 to 90 (cm/min), the wire extension may range from 15 to 30 (mm), and the welding heat input per pass may range from 10 to 50 (kJ/cm).

For multilayer welding with three electrodes, the following welding current conditions are more preferred.

First, a current value I1 of the first electrode and a current value I2 of the second electrode are set in the range of 280 A to 360 A. The current values I1 and I2 of the first electrode and the second electrode below 280 A result in a higher likelihood of insufficient melting on the groove face and incomplete fusion. On the other hand, current values I1 and I2 of more than 360 A increase the risk of hot cracking due to a vertically oriented weld bead with a higher height. Thus, the current value I1 of the first electrode and the current value I2 of the second electrode preferably range from 280 A to 360 A, more preferably 280 A to 340 A.

Next, a current value I3 of the third electrode can be controlled in each layer of a multilayer weld on the basis of the relationship with the weld bead width of each layer to suppress hot cracking that occurs in each weld layer, which is an object of the present invention. More specifically, a current value $I3_i$ of the third electrode of the i-th layer is set in a range satisfying the following formula (2):

$$I3_i \leq 30 \times G_{i-1} - 10 \quad (2)$$

wherein $I3_i$ denotes the current value [A] of the third electrode of the i-th layer, $G_{i-1}$ denotes the width [mm] of a weld bead formed by welding of a layer immediately before the i-th layer (that is, the (i - 1)-th layer), and i denotes a natural number of 2 or more.

An increase in the current value $I3_i$ of the third electrode results in a higher risk of hot cracking due to a vertically oriented weld bead with a higher height. On the other hand, the weld bead width Gi is affected by a width $G_{i-1}$ of a weld bead formed by welding of the previous layer (that is, the (i - 1)-th layer) and increases with the number of layers. From this, as a result of examining the relationship between the weld bead width and the current value of the third electrode, a favorable range was found, and the above formula (2) was derived therefrom. That is, in the range satisfying the formula (2), a vertically oriented weld bead is less likely to be formed, thus producing a good effect of preventing hot cracking.

EXAMPLES

The present invention will be further described below on the basis of Examples. It should be noted that the following examples are for illustrative purposes only and are not intended to limit the scope of the present invention.

First, molten steel with the chemical composition shown in Table 1 was obtained by steelmaking to produce a steel raw material (slab) by continuous casting or the like. The composition shown in Table 1 is the chemical composition of a steel plate serving as a base material. The column "-" in Table 1 indicates no intentional addition and includes not only "not contained" (0%) but also "inevitably contained".

[Table 1]

| Steel grade | Chemical composition (% by mass)*1 | | | | | | | | | | | | | | | | | | | | Ceq. |
|---|---|---|---|---|---|---|---|---|---|---|---|---|---|---|---|---|---|---|---|---|---|
| | C | Si | Mn | P | S | Nb | Al | O | N | Cu | Ni | Cr | Mo | Ti | V | B | W | Ca | Mg | REM | |
| A | 0.09 | 0.27 | 1.58 | 0.017 | 0.010 | 0.031 | 0.072 | 0.0058 | 0.0039 | - | - | - | - | - | - | - | - | - | - | - | 0.36 |
| B | 0.06 | 0.46 | 1.80 | 0.015 | 0.009 | 0.076 | 0.034 | 0.0077 | 0.0035 | - | - | - | - | - | - | - | - | - | - | - | 0.36 |
| C | 0.10 | 0.29 | 1.48 | 0.010 | 0.012 | 0.074 | 0.070 | 0.0042 | 0.0052 | - | - | - | - | - | - | - | - | - | - | - | 0.35 |
| D | 0.07 | 0.45 | 1.89 | 0.020 | 0.006 | 0.057 | 0.050 | 0.0074 | 0.0051 | 1.352 | - | - | - | - | - | - | - | - | - | - | 0.47 |
| E | 0.15 | 0.47 | 1.10 | 0.018 | 0.004 | 0.049 | 0.037 | 0.0063 | 0.0029 | - | 1.291 | - | - | - | - | - | - | - | - | - | 0.42 |
| F | 0.08 | 0.34 | 0.93 | 0.016 | 0.014 | 0.055 | 0.068 | 0.0039 | 0.0051 | - | - | 0.372 | - | - | - | - | - | - | - | - | 0.31 |
| G | 0.06 | 0.34 | 1.66 | 0.023 | 0.005 | 0.066 | 0.061 | 0.0051 | 0.0069 | - | - | - | 0.720 | - | - | - | - | - | - | - | 0.48 |
| H | 0.08 | 0.41 | 1.77 | 0.007 | 0.003 | 0.064 | 0.024 | 0.0074 | 0.0084 | - | - | - | - | 0.063 | - | - | - | - | - | - | 0.37 |
| I | 0.11 | 0.37 | 1.32 | 0.014 | 0.018 | 0.055 | 0.045 | 0.0047 | 0.0040 | - | - | - | - | - | 0.159 | - | - | - | - | - | 0.36 |
| J | 0.13 | 0.26 | 1.36 | 0.013 | 0.018 | 0.032 | 0.057 | 0.0044 | 0.0063 | - | - | - | - | - | - | 0.0093 | - | - | - | - | 0.35 |
| K | 0.10 | 0.45 | 1.57 | 0.025 | 0.018 | 0.048 | 0.070 | 0.0075 | 0.0067 | - | - | - | - | - | - | - | 0.068 | - | - | - | 0.37 |
| L | 0.13 | 0.36 | 1.15 | 0.021 | 0.005 | 0.028 | 0.060 | 0.0033 | 0.0060 | - | - | - | - | - | - | - | - | 0.0030 | - | - | 0.32 |
| M | 0.06 | 0.44 | 2.05 | 0.018 | 0.013 | 0.068 | 0.057 | 0.0073 | 0.0063 | - | - | - | - | - | - | - | - | - | 0.0119 | - | 0.40 |
| N | 0.04 | 0.56 | 1.75 | 0.014 | 0.009 | 0.082 | 0.052 | 0.0056 | 0.0033 | - | - | - | - | - | - | - | - | - | - | 0.0280 | 0.33 |
| O | 0.28 | 0.31 | 0.98 | 0.006 | 0.011 | 0.054 | 0.232 | 0.0038 | 0.0067 | - | - | - | - | - | - | - | - | - | - | - | 0.44 |
| P | 0.07 | 0.49 | 1.83 | 0.066 | 0.009 | 0.021 | 0.079 | 0.0084 | 0.0047 | - | - | - | - | - | - | - | - | - | - | - | 0.38 |
| Q | 0.07 | 0.32 | 0.92 | 0.017 | 0.045 | 0.036 | 0.089 | 0.0021 | 0.0011 | - | - | - | - | - | - | - | - | - | - | - | 0.23 |
| R | 0.12 | 0.29 | 4.31 | 0.018 | 0.011 | 0.062 | 0.037 | 0.0025 | 0.0050 | - | - | - | - | - | - | - | - | - | - | - | 0.84 |
| S | 0.09 | 1.56 | 1.64 | 0.020 | 0.004 | 0.297 | 0.056 | 0.0056 | 0.0075 | - | - | - | - | - | - | - | - | - | - | - | 0.37 |

*1: The remainder is composed of Fe and incidental impurities.

*2: Ceq = [C] + [Mn]/6 + ([Cr] + [Mo] + [V])/5 + ([Cu] + [Ni])/15; each element symbol denotes the corresponding element content (% by mass) and is 0 in the absence of the element.

*3: The column "-" indicates no intentional addition and includes not only "not contained" (0%) but also "inevitably contained".

The slab was then sequentially subjected to heating, hot rolling, and cooling steps to produce a steel plate with a thickness T (mm) shown in Tables 2-1 and 2-2. The initial rolling temperature in the hot rolling step ranged from 990°C to 1140°C in a steel plate surface layer, and the rolling finish temperature ranged from 670°C to 830°C in the steel plate surface layer. With respect to the steel plate temperature, the surface layer temperature was measured with a radiation thermometer, and the temperature at the mid-thickness position was measured by attaching a thermocouple to the mid-thickness position. Cooling after the hot rolling was performed by spraying water at a high flow rate on the front and back sides of the steel plate.

On the other hand, molten steel was melted in a vacuum melting furnace and was cast to produce a steel ingot, and the steel ingot was heated to 1200°C and was then subjected to hot and cold working to produce a gas-shielded arc welding wire of 1.2 mmΦ. The wire steel type (grade) used was G 59J A 1 in addition to YGW18.

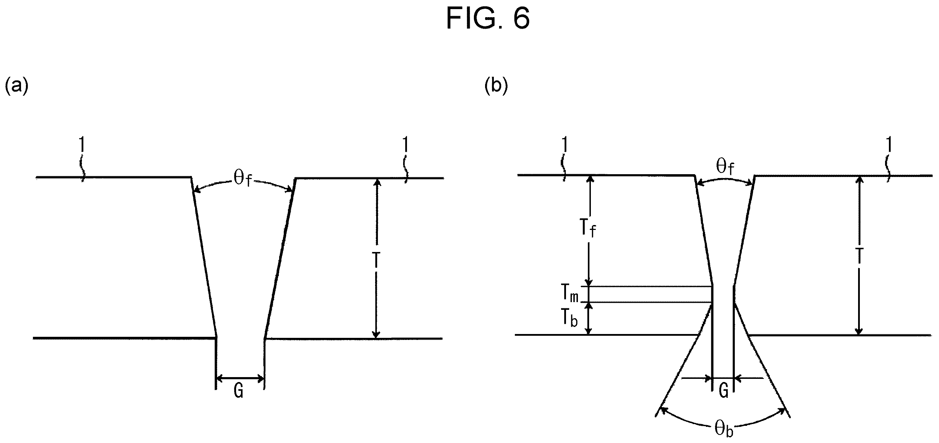

The steel plate was then subjected to edge preparation to form a groove shape shown in Tables 2-1 and 2-2. In Tables 2-1 and 2-2, the groove shape V (groove) is the shape illustrated in Fig. 6(a), and the groove shape X (groove) is the shape illustrated in Fig. 6(b). Furthermore, the welding wire thus produced was used for gas-shielded arc welding to form a weld metal in the above-described groove, thereby producing a welded joint.

[Table 2-1]

| Joint No. | Steel grade of steel sheet | Wire steel type (grade) | Groove shape | Thickness T (mm) | Gap G (mm) | Front surface groove angle $\theta_f$ (degree) | Back surface groove angle $\theta_b$ (degree) | Front surface thickness $T_f$ (mm) | Intermediate thickness $T_m$ (mm) | Back surface thickness $T_b$ (mm) |
|---|---|---|---|---|---|---|---|---|---|---|
| 1 | A | YGW18 | V | 50 | 6 | 10 | - | - | - | - |
| 2 | A | YGW18 | V | 100 | 6 | 10 | - | - | - | - |
| 3 | A | YGW18 | V | 100 | 6 | 10 | - | - | - | - |
| 4 | A | YGW18 | V | 100 | 6 | 10 | - | - | - | - |
| 5 | A | YGW18 | V | 100 | 6 | 10 | - | - | - | - |
| 6 | A | YGW18 | V | 100 | 6 | 10 | - | - | - | - |
| 6-2 | A | YGW18 | V | 100 | 6 | 10 | - | - | - | - |
| 6-3 | A | YGW18 | V | 100 | 6 | 10 | - | - | - | - |
| 7 | A | YGW18 | V | 100 | 6 | 10 | - | - | - | - |
| 8 | A | YGW18 | V | 100 | 6 | 10 | - | - | - | - |
| 9 | A | YGW18 | V | 100 | 6 | 10 | - | - | - | - |

(continued)

| Joint No. | Steel grade of steel sheet | Wire steel type (grade) | Groove shape | Thickness T (mm) | Gap G (mm) | Front surface groove angle $\theta_f$ (degree) | Back surface groove angle $\theta_b$ (degree) | Front surface thickness $T_f$ (mm) | Intermediate thickness $T_m$ (mm) | Back surface thickness $T_b$ (mm) |
|---|---|---|---|---|---|---|---|---|---|---|
| 10 | A | YGW18 | V | 100 | 6 | 10 | - | - | - | - |
| 11 | A | YGW18 | V | 100 | 6 | 10 | - | - | - | - |
| 12 | A | G 59J A 1 | V | 100 | 6 | 10 | - | - | - | - |
| 13 | A | G 59J A 1 | V | 100 | 6 | 10 | - | - | - | - |
| 14 | A | G 59J A 1 | V | 100 | 6 | 10 | - | - | - | - |
| 14-2 | A | G 59J A 1 | V | 100 | 6 | 10 | - | - | - | - |
| 15 | A | G 59J A 1 | V | 100 | 6 | 10 | - | - | - | - |
| 16 | A | G 59J A 1 | V | 100 | 6 | 10 | - | - | - | - |
| 17 | A | G 59J A 1 | V | 150 | 6 | 10 | - | - | - | - |
| 18 | B | YGW18 | X | 50 | 6 | 10 | 20 | 38 | 2 | 10 |
| 19 | B | YGW18 | X | 100 | 6 | 10 | 20 | 83 | 2 | 15 |
| 20 | B | YGW18 | X | 150 | 8 | 10 | 20 | 118 | 2 | 30 |
| 21 | C | YGW18 | X | 100 | 6 | 10 | 20 | 83 | 2 | 15 |
| 22 | D | YGW18 | X | 100 | 6 | 10 | 20 | 83 | 2 | 15 |
| 22-2 | D | G 59J A 1 | X | 100 | 6 | 10 | 20 | 83 | 2 | 15 |
| 23 | E | YGW18 | X | 100 | 6 | 10 | 20 | 83 | 2 | 15 |
| 23-2 | E | YGW18 | X | 100 | 6 | 10 | 20 | 83 | 2 | 15 |
| 24 | F | YGW18 | X | 100 | 6 | 10 | 20 | 83 | 2 | 15 |
| 25 | G | YGW18 | X | 100 | 6 | 10 | 20 | 83 | 2 | 15 |

[Table 2-2]

| Joint No. | Steel grade of steel sheet | Wire steel type (grade) | Groove shape | Thickness T (mm) | Gap G (mm) | Front surface groove angle $\theta_f$ (degree) | Back surface groove angle $\theta_b$ (degree) | Front surface thickness $T_f$ (mm) | Intermediate thickness $T_m$ (mm) | Back surface thickness $T_b$ (mm) |
|---|---|---|---|---|---|---|---|---|---|---|
| 26 | H | YGW18 | X | 100 | 6 | 10 | 20 | 83 | 2 | 15 |
| 27 | I | YGW18 | X | 100 | 6 | 10 | 20 | 83 | 2 | 15 |
| 27-2 | I | YGW18 | X | 100 | 6 | 10 | 20 | 83 | 2 | 15 |
| 28 | J | YGW18 | X | 100 | 6 | 10 | 20 | 83 | 2 | 15 |
| 29 | K | YGW18 | X | 100 | 6 | 10 | 20 | 83 | 2 | 15 |
| 30 | L | YGW18 | X | 100 | 6 | 10 | 20 | 83 | 2 | 15 |

(continued)

| Joint No. | Steel grade of steel sheet | Wire steel type (grade) | Groove shape | Thickness T (mm) | Gap G (mm) | Front surface groove angle $\theta_f$ (degree) | Back surface groove angle $\theta_b$ (degree) | Front surface thickness $T_f$ (mm) | Intermediate thickness $T_m$ (mm) | Back surface thickness $T_b$ (mm) |
|---|---|---|---|---|---|---|---|---|---|---|
| 30-2 | L | YGW18 | X | 100 | 6 | 10 | 20 | 83 | 2 | 15 |
| 31 | M | YGW18 | X | 100 | 6 | 10 | 20 | 83 | 2 | 15 |
| 31-2 | M | YGW18 | X | 100 | 6 | 10 | 20 | 83 | 2 | 15 |
| 32 | N | YGW18 | X | 100 | 6 | 10 | 20 | 83 | 2 | 15 |
| 33 | O | YGW18 | X | 100 | 6 | 10 | 20 | 83 | 2 | 15 |
| 34 | P | YGW18 | X | 100 | 6 | 10 | 20 | 83 | 2 | 15 |
| 35 | Q | YGW18 | X | 100 | 6 | 10 | 20 | 83 | 2 | 15 |
| 36 | R | YGW18 | X | 100 | 6 | 10 | 20 | 83 | 2 | 15 |
| 37 | S | YGW18 | X | 100 | 6 | 10 | 20 | 83 | 2 | 15 |
| 38 | A | YGW18 | V | 100 | 6 | 10 | - | - | - | - |
| 39 | A | YGW18 | V | 100 | 6 | 10 | - | - | - | - |
| 40 | A | YGW18 | V | 100 | 6 | 10 | - | - | - | - |
| 41 | A | YGW18 | V | 100 | 6 | 10 | - | - | - | - |
| 42 | A | YGW18 | V | 100 | 6 | 10 | - | - | - | - |
| 43 | A | YGW18 | V | 100 | 6 | 10 | - | - | - | - |
| 44 | A | YGW18 | V | 100 | 6 | 10 | - | - | - | - |
| 45 | A | YGW18 | V | 100 | 6 | 10 | - | - | - | - |
| 46 | A | YGW18 | V | 100 | 6 | 10 | - | - | - | - |
| 47 | A | YGW18 | V | 100 | 6 | 10 | - | - | - | - |
| 48 | A | YGW18 | V | 100 | 0 | 4 | - | - | - | - |
| 49 | A | YGW18 | V | 100 | 10 | 20 | - | - | - | - |
| 50 | A | YGW18 | V | 100 | 6 | 10 | - | - | - | - |
| 51 | A | YGW18 | V | 100 | 6 | 10 | - | - | - | - |

Specific welding conditions for the gas-shielded arc welding were no preheating, flat position welding, a welding current of 180 to 390 A, a welding voltage of 22 to 38 V, a welding speed of 40 to 120 cm/min, and an interpass temperature of 200°C or less. The number of layers of the weld metal was three or more.

Tables 3-1 to 3-4 show welding conditions for each electrode of the gas-shielded arc welding. Welding electrodes were arranged as illustrated in Figs. 4 and 5. The distance b between the welding wire tips of the second electrode and the third electrode was 18 mm, and the distance c between the welding wire tips of the third electrode and the fourth electrode was 10 mm. In the column of "Polarity" in Tables 3-1 and 3-3, wire negative is described as "Positive electrode", and wire positive is described as "Reverse electrode".

[Table 3-1]

| Joint No. | Welding conditions for first electrode | | | | | | | Welding conditions for second electrode | | | | | | | Welding conditions for third electrode | | | | | Welding conditions for fourth electrode | | | |
|---|---|---|---|---|---|---|---|---|---|---|---|---|---|---|---|---|---|---|---|---|---|---|---|---|
| | Polarity | REM content of welding wire (% by mass) | Inclination angle Φ of contact tip (degree) | Distance d between welding wire tip end portion and groove face (mm) | Radius of curvature of welding wire (mm) | Welding current (A) | Welding voltage (V) | Polarity | REM content of welding wire (% by mass) | Inclination angle Φ of contact tip (degree) | Distance d between welding wire tip end portion and groove face (mm) | Radius of curvature of welding wire (mm) | Welding current (A) | Welding voltage (V) | Polarity | REM content of welding wire (% by mass) | Welding current (A) | Welding voltage (V) | Formula (2) | Polarity | REM content of welding wire (% by mass) | Welding current (A) | Welding voltage (V) |
| 1 | Positive electrode | 0.045 | 8 | 0.7 | 215 | 320 | 35 | Reverse electrode | 0.045 | 8 | 0.7 | 215 | 320 | 35 | Positive electrode | 0.045 | 330 | 35 | ○ | Positive electrode | 0.045 | 330 | 35 |
| 2 | Positive electrode | 0.045 | 8 | 0.7 | 215 | 320 | 35 | Reverse electrode | 0.045 | 8 | 0.7 | 215 | 320 | 35 | Positive electrode | 0.045 | 330 | 35 | ○ | Positive electrode | 0.045 | 330 | 35 |
| 3 | Reverse electrode | 0.045 | 8 | 0.7 | 215 | 290 | 33 | Positive electrode | 0.045 | 8 | 0.7 | 215 | 290 | 33 | Positive electrode | 0.045 | 300 | 33 | ○ | Reverse electrode | 0.045 | 300 | 33 |
| 4 | Positive electrode | 0.020 | 8 | 0.7 | 215 | 300 | 33 | Reverse electrode | 0.020 | 8 | 0.7 | 215 | 300 | 33 | Positive electrode | 0.045 | 290 | 33 | ○ | Reverse electrode | 0.045 | 290 | 33 |
| 5 | Positive electrode | 0.090 | 8 | 0.7 | 215 | 320 | 34 | Reverse electrode | 0.090 | 8 | 0.7 | 215 | 320 | 34 | Positive electrode | 0.045 | 320 | 34 | ○ | Positive electrode | 0.045 | 320 | 34 |
| 6 | Positive electrode | 0.045 | 0 | 0.7 | 215 | 340 | 36 | Reverse electrode | 0.045 | 0 | 0.7 | 215 | 340 | 36 | Positive electrode | 0.045 | 350 | 36 | ○ | Positive electrode | 0.045 | 350 | 36 |
| 6-2 | Positive electrode | 0.045 | 0 | 0.7 | 215 | 340 | 36 | Reverse electrode | 0.045 | 5 | 0.7 | 215 | 320 | 35 | Positive electrode | 0.045 | 320 | 35 | ○ | Positive electrode | 0.045 | 350 | 36 |
| 6-3 | Positive electrode | 0.045 | 0 | 0.7 | 215 | 340 | 36 | Reverse electrode | 0.045 | 12 | 0.7 | 215 | 320 | 35 | Positive electrode | 0.045 | 320 | 35 | ○ | Positive electrode | 0.045 | 350 | 36 |
| 7 | Positive electrode | 0.045 | 15 | 0.7 | 215 | 320 | 35 | Reverse electrode | 0.045 | 15 | 0.7 | 215 | 320 | 35 | Positive electrode | 0.045 | 320 | 35 | ○ | Positive electrode | 0.045 | 320 | 35 |
| 8 | Positive electrode | 0.045 | 8 | 0.5 | 215 | 320 | 35 | Reverse electrode | 0.045 | 8 | 0.5 | 215 | 320 | 35 | Positive electrode | 0.045 | 330 | 35 | ○ | Positive electrode | 0.045 | 330 | 35 |
| 9 | Positive electrode | 0.045 | 8 | 2.0 | 215 | 320 | 35 | Reverse electrode | 0.045 | 8 | 2.0 | 215 | 320 | 35 | Positive electrode | 0.045 | 320 | 35 | ∪ | Positive electrode | 0.045 | 320 | 35 |
| 10 | Positive electrode | 0.045 | 8 | 0.7 | 160 | 320 | 35 | Reverse electrode | 0.045 | 8 | 0.7 | 160 | 320 | 35 | Positive electrode | 0.045 | 330 | 35 | ○ | Positive electrode | 0.045 | 330 | 35 |
| 11 | Positive electrode | 0.045 | 8 | 0.7 | 280 | 320 | 35 | Reverse electrode | 0.045 | 8 | 0.7 | 215 | 320 | 35 | Positive electrode | 0.045 | 330 | 35 | ○ | Positive electrode | 0.045 | 330 | 35 |
| 12 | Positive electrode | 0.045 | 8 | 0.7 | 215 | 330 | 36 | Reverse electrode | 0.045 | 8 | 0.7 | 215 | 330 | 36 | Positive electrode | 0.045 | 330 | 36 | ○ | None | | | |
| 13 | Positive electrode | 0.045 | 8 | 0.7 | 215 | 320 | 35 | Reverse electrode | 0.045 | 8 | 0.7 | 215 | 320 | 35 | Positive electrode | 0.045 | 330 | 35 | | Positive electrode | 0.045 | 330 | 35 |
| 14 | Positive electrode | 0.045 | 8 | 0.7 | 215 | 290 | 33 | Reverse electrode | 0.045 | 8 | 0.7 | 215 | 290 | 33 | Positive electrode | 0.045 | 290 | 33 | ○ | Positive electrode | 0.045 | 290 | 33 |
| 14-2 | Positive electrode | 0.045 | 8 | 0.7 | 215 | 290 | 33 | Reverse electrode | 0.045 | 8 | 0.7 | 215 | 290 | 33 | Positive electrode | 0.045 | 290 | 33 | ○ | Positive electrode | 0.045 | 290 | 33 |
| 15 | Reverse electrode | 0.045 | 8 | 0.7 | 215 | 290 | 33 | Positive electrode | 0.045 | 8 | 0.7 | 215 | 290 | 33 | Positive electrode | 0.045 | 310 | 33 | ○ | Positive electrode | 0.045 | 310 | 33 |
| 16 | Positive electrode | 0.045 | 8 | 0.7 | 215 | 320 | 35 | Positive electrode | 0.045 | 8 | 0.7 | 215 | 320 | 35 | Positive electrode | 0.045 | 320 | 35 | ○ | Positive electrode | 0.045 | 320 | 35 |
| 17 | Reverse electrode | 0.045 | 8 | 0.7 | 215 | 320 | 34 | Positive electrode | 0.045 | 8 | 0.7 | 215 | 320 | 34 | Positive electrode | 0.045 | 330 | 34 | ○ | Positive electrode | 0.045 | 330 | 34 |
| 18 | Positive electrode | 0.045 | 8 | 0.7 | 215 | 320 | 35 | Reverse electrode | 0.045 | 8 | 0.7 | 215 | 320 | 35 | Positive electrode | 0.045 | 330 | 35 | ○ | Positive electrode | 0.045 | 330 | 35 |
| 19 | Positive electrode | 0.045 | 8 | 0.7 | 215 | 350 | 35 | Reverse electrode | 0.045 | 8 | 0.7 | 215 | 350 | 35 | Positive electrode | 0.045 | 350 | 35 | ○ | Positive electrode | 0.045 | 350 | 35 |
| 20 | Positive electrode | 0.045 | 8 | 0.7 | 215 | 350 | 36 | Reverse electrode | 0.045 | 8 | 0.7 | 215 | 350 | 36 | Positive electrode | 0.045 | 350 | 36 | ○ | Positive electrode | 0.045 | 350 | 36 |
| 21 | Positive electrode | 0.045 | 8 | 0.7 | 215 | 330 | 35 | Reverse electrode | 0.045 | 8 | 0.7 | 215 | 330 | 35 | Positive electrode | 0.045 | 330 | 35 | ○ | Positive electrode | 0.045 | 330 | 35 |
| 22 | Positive electrode | 0.045 | 8 | 0.7 | 215 | 320 | 35 | Reverse electrode | 0.045 | 8 | 0.7 | 215 | 320 | 35 | Positive electrode | 0.045 | 330 | 35 | ○ | Positive electrode | 0.045 | 330 | 35 |
| 22-2 | Positive electrode | 0.045 | 8 | 0.7 | 215 | 320 | 35 | Reverse electrode | 0.045 | 8 | 0.7 | 215 | 320 | 35 | Positive electrode | 0.045 | 330 | 35 | ○ | Positive electrode | 0.045 | 330 | 35 |
| 23 | Positive electrode | 0.045 | 8 | 0.7 | 215 | 280 | 32 | Reverse electrode | 0.045 | 8 | 0.7 | 215 | 280 | 32 | Positive electrode | 0.045 | 290 | 32 | ○ | Positive electrode | 0.045 | 290 | 32 |
| 23-2 | Positive electrode | 0.045 | 8 | 0.7 | 215 | 280 | 32 | Reverse electrode | 0.045 | 8 | 0.7 | 215 | 280 | 32 | Positive electrode | 0.045 | 290 | 32 | ○ | Positive electrode | 0.045 | 290 | 32 |
| 24 | Positive electrode | 0.045 | 8 | 0.7 | 215 | 320 | 35 | Reverse electrode | 0.045 | 8 | 0.7 | 215 | 320 | 35 | Positive electrode | 0.045 | 320 | 35 | ○ | Positive electrode | 0.045 | 320 | 35 |
| 25 | Positive electrode | 0.045 | 8 | 0.7 | 215 | 320 | 35 | Reverse electrode | 0.045 | 8 | 0.7 | 215 | 320 | 35 | Positive electrode | 0.045 | 320 | 35 | ○ | Positive electrode | 0.045 | 320 | 35 |

[Table 3-2]

| Joint No. | Other welding conditions | | | | | | | | |
|---|---|---|---|---|---|---|---|---|---|
| | Distance a between first and second tips (mm) | First and second electrodes tips arrangement angle α (degree) | Welding speed (cm/min) | Heat input (kJ/cm) | Shielding gas composition (% by volume) | Cross-sectional area N of gas outlet (mm²) | Shielding gas supply flow rate Q (L/min) | Angle X between gas outlet and groove bottom portion (degree) | Distance Y between gas outlet and welding wire tip (mm) |
| 1 | 7 | 30 | 90 | 30.3 | 100%$CO_2$ | 175 | 40 | 55 | 5 |
| 2 | 7 | 30 | 90 | 30.3 | 100%$CO_2$ | 175 | 40 | 55 | 5 |
| 3 | 7 | 30 | 90 | 26.0 | 100%$CO_2$ | 175 | 40 | 55 | 5 |
| 4 | 7 | 30 | 90 | 26.0 | 100%$CO_2$ | 175 | 40 | 55 | 5 |
| 5 | 7 | 30 | 60 | 43.5 | 100%$CO_2$ | 175 | 40 | 55 | 5 |
| 6 | 7 | 30 | 80 | 37.3 | 100%$CO_2$ | 200 | 50 | 50 | 10 |
| 6-2 | 7 | 30 | 80 | 35.4 | 100%$CO_2$ | 200 | 50 | 50 | 10 |
| 6-3 | 7 | 30 | 80 | 35.4 | 100%$CO_2$ | 200 | 50 | 50 | 10 |
| 7 | 7 | 30 | 80 | 33.6 | 100%$CO_2$ | 200 | 50 | 50 | 10 |
| 8 | 7 | 30 | 80 | 34.1 | 100%$CO_2$ | 200 | 50 | 50 | 10 |
| 9 | 7 | 30 | 60 | 44.8 | 100%$CO_2$ | 200 | 50 | 50 | 10 |
| 10 | 7 | 30 | 60 | 45.5 | 100%$CO_2$ | 180 | 50 | 60 | 10 |
| 11 | 7 | 30 | 60 | 45.5 | 100%$CO_2$ | 180 | 50 | 60 | 10 |
| 12 | 7 | 30 | 60 | 35.6 | 100%$CO_2$ | 180 | 50 | 60 | 10 |
| 13 | 5 | 30 | 60 | 45.5 | 100%$CO_2$ | 180 | 50 | 60 | 10 |
| 14 | 14 | 30 | 60 | 38.3 | 100%$CO_2$ | 180 | 50 | 60 | 10 |
| 14-2 | 18 | 30 | 60 | 38.3 | 100%$CO_2$ | 180 | 50 | 60 | 10 |
| 15 | 7 | 0 | 60 | 39.6 | 100%$CO_2$ | 180 | 50 | 60 | 10 |
| 16 | 7 | 45 | 60 | 44.8 | 100%$CO_2$ | 180 | 50 | 60 | 10 |
| 17 | 7 | 30 | 80 | 33.2 | 80%$CO_2$-20%Ar | 180 | 50 | 60 | 10 |
| 18 | 7 | 30 | 80 | 34.1 | 60%$CO_2$-40%Ar | 180 | 50 | 60 | 10 |
| 19 | 7 | 30 | 80 | 36.8 | 100%$CO_2$ | 180 | 50 | 60 | 10 |
| 20 | 7 | 30 | 80 | 37.8 | 100%$CO_2$ | 180 | 50 | 60 | 10 |
| 21 | 7 | 30 | 80 | 34.7 | 100%$CO_2$ | 180 | 50 | 60 | 10 |
| 22 | 7 | 30 | 80 | 34.1 | 100%$CO_2$ | 180 | 50 | 60 | 10 |
| 22 | 7 | 30 | 80 | 34.1 | 100%$CO_2$ | 180 | 50 | 60 | 10 |
| 23 | 7 | 30 | 80 | 27.4 | 100%$CO_2$ | 180 | 50 | 60 | 10 |
| 23 | 7 | 30 | 80 | 27.4 | 100%$CO_2$ | 180 | 50 | 60 | 10 |
| 24 | 7 | 30 | 80 | 33.6 | 100%$CO_2$ | 180 | 50 | 60 | 10 |
| 25 | 7 | 30 | 60 | 44.8 | 100%$CO_2$ | 180 | 50 | 60 | 10 |

[Table 3-3]

| Joint No. | Welding conditions for first electrode | | | | | | | Welding conditions for second electrode | | | | | | | Welding conditions for third electrode | | | | | Welding conditions for fourth electrode | | | |
|---|---|---|---|---|---|---|---|---|---|---|---|---|---|---|---|---|---|---|---|---|---|---|---|
| | Polarity | REM content of welding wire (% by mass) | Inclination angle Φ of contact tip (degree) | Distance d between welding wire tip end portion and groove face (mm) | Radius of curvature of welding wire (mm) | Welding current (A) | Welding voltage (V) | Polarity | REM content of welding wire (% by mass) | Inclination angle Φ of contact tip (degree) | Distance d between welding wire tip end portion and groove face (mm) | Radius of curvature of welding wire (mm) | Welding current (A) | Welding voltage (V) | Polarity | REM content of welding wire (% by mass) | Welding current (A) | Welding voltage (V) | Formula (2) | Polarity | REM content of welding wire (% by mass) | Welding current (A) | Welding voltage (V) |
| 26 | Positive electrode | 0.045 | 8 | 0.7 | 215 | 320 | 35 | Reverse electrode | 0.045 | 8 | 0.7 | 215 | 320 | 35 | Positive electrode | 0.045 | 280 | 35 | ○ | Positive electrode | 0.045 | 280 | 35 |
| 27 | Positive electrode | 0.045 | 8 | 0.7 | 215 | 330 | 34 | Reverse electrode | 0.045 | 8 | 0.7 | 215 | 330 | 34 | Positive electrode | 0.045 | 330 | 34 | ○ | Positive electrode | 0.045 | 330 | 34 |
| 27-2 | Positive electrode | 0.045 | 8 | 0.7 | 215 | 330 | 34 | Reverse electrode | 0.045 | 8 | 0.7 | 215 | 330 | 34 | Positive electrode | 0.045 | 330 | 34 | ○ | Positive electrode | 0.045 | 330 | 34 |
| 28 | Positive electrode | 0.045 | 8 | 0.7 | 215 | 320 | 35 | Reverse electrode | 0.045 | 8 | 0.7 | 215 | 320 | 35 | Positive electrode | 0.045 | 320 | 35 | ○ | None | | | |
| 29 | Positive electrode | 0.045 | 8 | 0.7 | 215 | 290 | 33 | Reverse electrode | 0.045 | 8 | 0.7 | 215 | 290 | 33 | Positive electrode | 0.045 | 300 | 34 | ○ | None | | | |
| 30 | Positive electrode | 0.045 | 8 | 0.7 | 215 | 310 | 34 | Reverse electrode | 0.045 | 8 | 0.7 | 215 | 310 | 34 | Positive electrode | 0.045 | 310 | 34 | ○ | None | | | |
| 30-2 | Positive electrode | 0.045 | 8 | 0.7 | 215 | 310 | 34 | Reverse electrode | 0.045 | 8 | 0.7 | 215 | 310 | 34 | Positive electrode | 0.045 | 310 | 34 | ○ | None | | | |
| 31 | Positive electrode | 0.045 | 8 | 0.7 | 215 | 340 | 36 | Reverse electrode | 0.045 | 8 | 0.7 | 215 | 340 | 36 | Positive electrode | 0.045 | 350 | 36 | ○ | None | | | |
| 31-2 | Positive electrode | 0.045 | 8 | 0.7 | 215 | 340 | 36 | Reverse electrode | 0.045 | 8 | 0.7 | 215 | 340 | 36 | Positive electrode | 0.045 | 350 | 36 | ○ | None | | | |
| 32 | Positive electrode | 0.045 | 8 | 0.7 | 215 | 320 | 35 | Reverse electrode | 0.045 | 8 | 0.7 | 215 | 320 | 35 | Positive electrode | 0.045 | 330 | 35 | ○ | None | | | |
| 33 | Positive electrode | 0.045 | 8 | 0.7 | 215 | 320 | 35 | Reverse electrode | 0.045 | 8 | 0.7 | 215 | 320 | 35 | Positive electrode | 0.045 | 320 | 35 | ○ | None | | | |
| 34 | Positive electrode | 0.045 | 8 | 0.7 | 215 | 330 | 35 | Reverse electrode | 0.045 | 8 | 0.7 | 215 | 330 | 35 | Positive electrode | 0.045 | 340 | 35 | ○ | None | | | |
| 35 | Positive electrode | 0.045 | 8 | 0.7 | 215 | 320 | 35 | Reverse electrode | 0.045 | 8 | 0.7 | 215 | 320 | 35 | Positive electrode | 0.045 | 320 | 35 | ○ | None | | | |
| 36 | Positive electrode | 0.045 | 8 | 0.7 | 215 | 310 | 34 | Reverse electrode | 0.045 | 8 | 0.7 | 215 | 310 | 34 | Positive electrode | 0.045 | 320 | 34 | ○ | None | | | |
| 37 | Positive electrode | 0.045 | 8 | 0.7 | 215 | 320 | 35 | Reverse electrode | 0.045 | 8 | 0.7 | 215 | 320 | 35 | Positive electrode | 0.045 | 320 | 35 | ○ | None | | | |
| 38 | Reverse electrode | 0.045 | 8 | 0.7 | 215 | 320 | 35 | Reverse electrode | 0.045 | 8 | 0.7 | 215 | 320 | 35 | Positive electrode | 0.045 | 320 | 35 | ○ | Positive electrode | 0.045 | 320 | 35 |
| 39 | Positive electrode | 0.010 | 8 | 0.7 | 215 | 330 | 36 | Reverse electrode | 0.045 | 8 | 0.7 | 215 | 330 | 36 | Positive electrode | 0.045 | 330 | 36 | ○ | Positive electrode | 0.045 | 330 | 36 |
| 40 | Positive electrode | 0.045 | 18 | 0.7 | 215 | 320 | 35 | Reverse electrode | 0.045 | 8 | 0.7 | 215 | 320 | 35 | Positive electrode | 0.045 | 330 | 35 | ○ | Positive electrode | 0.045 | 330 | 35 |
| 41 | Positive electrode | 0.045 | 8 | 0.0 | 215 | 320 | 35 | Reverse electrode | 0.045 | 8 | 0.0 | 215 | 320 | 35 | Positive electrode | 0.045 | 330 | 35 | ○ | Positive electrode | 0.045 | 330 | 35 |
| 42 | Positive electrode | 0.045 | 8 | 3.2 | 215 | 330 | 36 | Reverse electrode | 0.045 | 8 | 3.2 | 215 | 330 | 36 | Positive electrode | 0.045 | 330 | 36 | ○ | Positive electrode | 0.045 | 330 | 36 |
| 43 | Positive electrode | 0.045 | 8 | 0.7 | 100 | 320 | 35 | Reverse electrode | 0.045 | 8 | 0.7 | 100 | 320 | 35 | Positive electrode | 0.045 | 320 | 35 | × | Positive electrode | 0.045 | 320 | 35 |
| 44 | Positive electrode | 0.045 | 8 | 0.7 | 215 | 350 | 37 | Reverse electrode | 0.045 | 8 | 0.7 | 215 | 350 | 37 | None | | | | × | None | | | |
| 45 | Positive electrode | 0.045 | 8 | 0.7 | 215 | 320 | 35 | Reverse electrode | 0.045 | 8 | 0.7 | 215 | 320 | 35 | Positive electrode | 0.045 | 330 | 35 | ○ | Positive electrode | 0.045 | 330 | 35 |
| 46 | Positive electrode | 0.045 | 8 | 0.7 | 215 | 320 | 35 | Reverse electrode | 0.045 | 8 | 0.7 | 215 | 320 | 35 | Positive electrode | 0.045 | 320 | 36 | ○ | Positive electrode | 0.045 | 320 | 36 |
| 47 | Positive electrode | 0.045 | 8 | 0.7 | 215 | 300 | 34 | Reverse electrode | 0.045 | 8 | 0.7 | 215 | 300 | 34 | Positive electrode | 0.045 | 330 | 35 | ○ | Positive electrode | 0.045 | 330 | 35 |
| 48 | Positive electrode | 0.045 | 8 | 0.7 | 215 | 300 | 34 | Reverse electrode | 0.045 | 8 | 0.7 | 215 | 300 | 34 | Positive electrode | 0.045 | 330 | 35 | × | Positive electrode | 0.045 | 330 | 35 |
| 49 | Positive electrode | 0.045 | 8 | 0.7 | 215 | 300 | 34 | Reverse electrode | 0.045 | 8 | 0.7 | 215 | 300 | 34 | Positive electrode | 0.045 | 330 | 35 | ○ | Positive electrode | 0.045 | 330 | 35 |
| 50 | Positive electrode | 0.045 | 8 | 0.7 | 215 | 380 | 35 | Reverse electrode | 0.045 | 8 | 0.7 | 215 | 380 | 35 | Positive electrode | 0.045 | 390 | 38 | × | Positive electrode | 0.045 | 390 | 38 |
| 51 | Positive electrode | 0.045 | 8 | 0.7 | 215 | 180 | 22 | Reverse electrode | 0.045 | 8 | 0.7 | 215 | 180 | 22 | Positive electrode | 0.045 | 240 | 26 | × | None | | | |

[Table 3-4]

| Joint No. | Other welding conditions | | | | | | | | |
|---|---|---|---|---|---|---|---|---|---|
| | Distance a between first and second tips (mm) | First and second electrodes tips arrangement angle $\alpha$ (degree) | Welding speed (cm/min) | Heat input (kJ/cm) | Shielding gas composition (% by volume) | Cross-sectional area N of gas outlet (mm$^2$) | Shielding gas supply flow rate Q (L/min) | Angle X between gas outlet and groove bottom portion (degree) | Distance Y between gas outlet and welding wire tip (mm) |
| 26 | 7 | 30 | 60 | 42.0 | 100%$CO_2$ | 180 | 50 | 60 | 10 |
| 27 | 7 | 30 | 90 | 29.9 | 100%$CO_2$ | 180 | 50 | 60 | 10 |
| 27 | 7 | 30 | 90 | 29.9 | 100%$CO_2$ | 180 | 50 | 60 | 10 |
| 28 | 7 | 30 | 90 | 22.4 | 100%$CO_2$ | 180 | 50 | 60 | 10 |
| 29 | 7 | 30 | 90 | 19.6 | 100%$CO_2$ | 180 | 50 | 60 | 10 |
| 30 | 7 | 30 | 60 | 31.6 | 100%$CO_2$ | 180 | 50 | 60 | 10 |
| 30 | 7 | 30 | 60 | 31.6 | 100%$CO_2$ | 180 | 50 | 60 | 10 |
| 31 | 7 | 30 | 60 | 37.1 | 100%$CO_2$ | 180 | 50 | 60 | 10 |
| 31 | 7 | 30 | 60 | 37.1 | 100%$CO_2$ | 180 | 50 | 60 | 10 |
| 32 | 7 | 30 | 60 | 34.0 | 100%$CO_2$ | 180 | 50 | 60 | 10 |
| 33 | 7 | 30 | 60 | 33.6 | 100%$CO_2$ | 180 | 50 | 60 | 10 |
| 34 | 7 | 30 | 60 | 35.0 | 100%$CO_2$ | 180 | 50 | 60 | 10 |
| 35 | 7 | 30 | 60 | 33.6 | 100%$CO_2$ | 180 | 50 | 60 | 10 |
| 36 | 7 | 30 | 60 | 32.0 | 100%$CO_2$ | 180 | 50 | 60 | 10 |
| 37 | 7 | 30 | 60 | 33.6 | 100%$CO_2$ | 180 | 50 | 60 | 10 |
| 38 | 7 | 30 | 60 | 44.8 | 100%$CO_2$ | 180 | 50 | 60 | 10 |
| 39 | 7 | 30 | 60 | 47.5 | 100%$CO_2$ | 180 | 50 | 60 | 10 |
| 40 | 7 | 30 | 60 | 45.5 | 100%$CO_2$ | 175 | 50 | 60 | 12 |
| 41 | 7 | 30 | 60 | 45.5 | 100%$CO_2$ | 175 | 50 | 60 | 12 |
| 42 | 7 | 30 | 60 | 47.5 | 100%$CO_2$ | 175 | 50 | 60 | 12 |
| 43 | 7 | 30 | 60 | 44.8 | 100%$CO_2$ | 175 | 50 | 55 | 5 |
| 44 | 7 | 30 | 60 | 25.9 | 100%$CO_2$ | 175 | 50 | 55 | 5 |
| 45 | 4 | 30 | 60 | 45.5 | 100%$CO_2$ | 175 | 50 | 55 | 5 |

(continued)

| Joint No. | Other welding conditions | | | | | | | | |
|---|---|---|---|---|---|---|---|---|---|
| | Distance a between first and second tips (mm) | First and second electrodes tips arrangement angle $\alpha$ (degree) | Welding speed (cm/min) | Heat input (kJ/cm) | Shielding gas composition (% by volume) | Cross-sectional area N of gas outlet ($mm^2$) | Shielding gas supply flow rate Q (L/min) | Angle X between gas outlet and groove bottom portion (degree) | Distance Y between gas outlet and welding wire tip (mm) |
| 46 | 7 | 65 | 60 | 45.4 | 100%$CO_2$ | 175 | 50 | 55 | 5 |
| 47 | 7 | 30 | 60 | 43.5 | 50%$CO_2$-50%Ar | 175 | 50 | 55 | 5 |
| 48 | 7 | 30 | 60 | 43.5 | 100%$CO_2$ | 175 | 50 | 55 | 5 |
| 49 | 7 | 30 | 60 | 43.5 | 100%$CO_2$ | 175 | 50 | 55 | 5 |
| 50 | 7 | 30 | 40 | 84.4 | 100%$CO_2$ | 175 | 50 | 55 | 5 |
| 51 | 7 | 30 | 120 | 7.1 | 100%$CO_2$ | 175 | 50 | 55 | 5 |

[Evaluation of Weld Metal Shape]

At the positions of 1/4D, 2/4D, and 3/4D in the weld line direction in the welded joint, a macro cross section was taken in the vertical direction and was examined. D denotes the length from one end to the other end of the weld line. The position of 1/4D represents a position moved by 1/4 of D in the welding direction from one end of the weld line, likewise, the position of 2/4D represents the center position of the weld line, and the position of 3/4D represents a position moved by 3/4 of D in the welding direction.

Subsequently, for each layer of the weld metal excluding the first layer and the final layer, the width of the weld metal (the distance between fusion lines) at the centerline between the upper portion and the lower portion thereof was measured to determine the width W (mm) for each layer and record the minimum value and the maximum value of the width W in the entire weld metal.

Furthermore, the cross-sectional area A ($mm^2$) of the entire weld metal in the direction perpendicular to the weld line of the weld metal was measured and divided by the number of weld layers p (layers) to record the ratio [A/p]. Likewise, the ratio [p/T] of the number of weld layers p to the steel plate thickness T was recorded.

[Measurement of Dislocation Density of Steel Plate]

A sample was taken such that a test surface was located at the middle position in the longitudinal direction and the width direction of each steel plate and at a position 1 mm below a steel plate surface. A surface of the sample was mirror-polished by mechanical polishing and electropolishing, and the dislocation density $\rho$ ($m^{-2}$) was measured with an X-ray diffractometer by a Williamson-Hall method (reference 1).
(Reference 1) G. K. Williams and W. H. Hall: Acta Metall., 1 (1953), 22

[Average Grain Size]

In the same manner as described above, a sample was taken such that an evaluation surface was located at a position 1 mm below a steel plate surface at the middle position in the longitudinal direction and the width direction of the steel plate and was a cross section in the longitudinal direction of the steel plate at the mid-thickness position. A surface of the sample was mirror-polished with colloidal silica finishing and was examined by a backscattered electron diffraction method (EBSP) under the following conditions. The measurement region was 300 $\mu$m x 400 $\mu$m, and the measurement step size was 1 $\mu$m. The equivalent circular diameter of a microstructure surrounded by a high-angle grain boundary with a misorientation of 15 degrees or more from an adjacent crystal grain was determined from a crystal orientation map thus obtained, and the average value of the equivalent circular diameters in the measurement region was defined as the average grain size. the steel plate surface layer and the center of the thickness of the steel plate in each example have a microstructure composed mainly of bainite or quasi-polygonal ferrite.

[Evaluation of Welding Defect]

The welded joint thus produced was subjected to a radiographic test according to JIS Z 3104 to evaluate the presence or absence of a welding defect. A welding defect corresponding to Class 1 of JIS Z 3104 was rated as "Good (circle)", a welding defect corresponding to Class 2 was rated as "Fair (triangle)", and a welding defect corresponding to Class 3 or Class 4 was rated as "Poor (cross)". Class 1 or 2 is judged to be acceptable, and Class 3 or 4 is judged to be fail.

[Evaluation of Mechanical Properties of Weld Metal]

A test piece for tensile test (parallel portion diameter: 6 mm) and a Charpy impact test specimen (V-notch) of the weld metal were taken from the welded joint in accordance with the provision of JIS Z 3111 to perform a tensile test and an impact test. Three test pieces were subjected to the tensile test at room temperature (normal temperature), and the average value of the measured values (0.2% proof strength, tensile strength) was taken as the tensile property of the weld metal of the welded joint. Likewise, three test specimens were subjected to the Charpy impact test to determine the absorbed energy ($vE_{-40}$) at a test temperature of -40°C, and the average value thereof was taken as the cryogenic impact toughness of the weld metal of the welded joint. A value of 30 J or more was rated as "Good (circle)", and a value of less than 30 J was rated as "Poor (cross)".

The tensile test of the welded joint at room temperature was also performed in accordance with the provision of JIS Z 3121. A test specimen was taken in the direction perpendicular to a weld axis so that the weld axis was at the mid-length of a parallel portion of the test specimen, and was a No. 1A test specimen with the same thickness as the total thickness of the welded joint. A yield stress value of 325 MPa or more was rated as "Good (circle)", and a yield stress value of less than 325 MPa was rated as "Poor (cross)". A tensile strength value of 520 MPa or more was rated as "Good (circle)", and a tensile strength value of less than 520 MPa was rated as "Poor (cross)".

Furthermore, a Charpy impact test of a weld heat-affected zone of the welded joint was also performed in accordance with the provision of JIS Z 3128. The V-notch direction of a test specimen was perpendicular to a steel plate surface, and the test specimen was taken from the mid-thickness position at the center position of the weld metal, at the position on the fusion line, and at the position of the fusion line + 1 mm. A value of 30 J or more was rated as "Good (circle)", and a value of less than 30 J was rated as "Poor (cross)".

As described above, as target values of the present invention, the room-temperature yield strength (0.2% proof strength) of a weld metal is 325 MPa or more, the tensile strength thereof is 520 MPa or more, and the room-temperature tensile strength of a welded joint is 520 MPa or more. Furthermore, the absorbed energy ($vE_{-40}$) of a weld metal and a weld heat-affected zone in a Charpy impact test at the test temperature of -40°C is 30 J or more.

[Deposition Rate]

The diameter (mm) of a wire used during welding and the feed speed (mm/min) of each wire during welding were measured, and the value calculated by dividing the deposition amount (g) by the unit welding time (min) was recorded as the deposition rate (g/min). A value of 250 g/min or more was rated as "Good (circle)", and a value of less than 250 g/min was rated as "Poor (cross)".

Among the above measurement and evaluation results, the results of the chemical composition of the weld metal are shown in Tables 4-1 and 4-2, and the results of the characteristics of the weld metal and the steel plate, the performance of the welded joint, and the like are shown in Tables 5-1 and 5-2.

[Table 4-1]

| Joint No. | Steel grade | Wire steel type | Groove shape | Chemical composition of weld metal (% by mass) *1 | | | | | | | | | | | | | | | | | | | |
|---|---|---|---|---|---|---|---|---|---|---|---|---|---|---|---|---|---|---|---|---|---|---|---|
| | | | | C | Si | Mn | P | S | Nb | Al | O | N | Cu | Ni | Cr | Mo | Ti | V | B | W | Ca | Mg | REM |
| 1 | A | YGW18 | V | 0.07 | 0.46 | 1.54 | 0.012 | 0.007 | 0.013 | 0.028 | 0.034 | 0.003 | 0.001 | 0.001 | 0.003 | 0.087 | 0.001 | 0.001 | 0.001 | 0.001 | 0.0012 | 0.0012 | 0.0281 |
| 2 | A | YGW18 | V | 0.06 | 0.49 | 1.54 | 0.012 | 0.006 | 0.010 | 0.022 | 0.031 | 0.003 | 0.001 | 0.001 | 0.004 | 0.100 | 0.001 | 0.001 | 0.001 | 0.001 | 0.0014 | 0.0014 | 0.0320 |
| 3 | A | YGW18 | V | 0.06 | 0.48 | 1.54 | 0.012 | 0.007 | 0.012 | 0.025 | 0.032 | 0.003 | 0.001 | 0.001 | 0.003 | 0.094 | 0.001 | 0.001 | 0.001 | 0.001 | 0.0013 | 0.0013 | 0.0303 |
| 4 | A | YGW18 | V | 0.06 | 0.47 | 1.54 | 0.012 | 0.007 | 0.012 | 0.026 | 0.033 | 0.003 | 0.001 | 0.001 | 0.003 | 0.092 | 0.001 | 0.001 | 0.001 | 0.001 | 0.0013 | 0.0013 | 0.0132 |
| 5 | A | YGW18 | V | 0.07 | 0.44 | 1.55 | 0.013 | 0.007 | 0.015 | 0.033 | 0.037 | 0.003 | 0.001 | 0.001 | 0.003 | 0.077 | 0.001 | 0.001 | 0.001 | 0.001 | 0.0011 | 0.0011 | 0.0495 |
| 6 | A | YGW18 | V | 0.06 | 0.48 | 1.54 | 0.012 | 0.006 | 0.011 | 0.024 | 0.032 | 0.003 | 0.001 | 0.001 | 0.003 | 0.097 | 0.001 | 0.001 | 0.001 | 0.001 | 0.0014 | 0.0014 | 0.0311 |
| 6-2 | A | YGW18 | V | 0.06 | 0.49 | 1.53 | 0.011 | 0.007 | 0.012 | 0.024 | 0.032 | 0.003 | 0.001 | 0.001 | 0.003 | 0.102 | 0.001 | 0.001 | 0.001 | 0.001 | 0.0013 | 0.0014 | 0.0326 |
| 6-3 | A | YGW18 | V | 0.06 | 0.47 | 1.54 | 0.012 | 0.006 | 0.011 | 0.022 | 0.031 | 0.003 | 0.001 | 0.001 | 0.003 | 0.103 | 0.001 | 0.001 | 0.001 | 0.001 | 0.0015 | 0.0013 | 0.0331 |
| 7 | A | YGW18 | V | 0.06 | 0.50 | 1.54 | 0.012 | 0.006 | 0.010 | 0.021 | 0.030 | 0.003 | 0.001 | 0.001 | 0.004 | 0.103 | 0.001 | 0.001 | 0.001 | 0.001 | 0.0015 | 0.0015 | 0.0330 |
| 8 | A | YGW18 | V | 0.07 | 0.47 | 1.54 | 0.012 | 0.007 | 0.013 | 0.027 | 0.034 | 0.003 | 0.001 | 0.001 | 0.003 | 0.090 | 0.001 | 0.001 | 0.001 | 0.001 | 0.0013 | 0.0013 | 0.0288 |
| 9 | A | YGW18 | V | 0.06 | 0.49 | 1.54 | 0.012 | 0.006 | 0.010 | 0.022 | 0.031 | 0.003 | 0.001 | 0.001 | 0.004 | 0.100 | 0.001 | 0.001 | 0.001 | 0.001 | 0.0014 | 0.0014 | 0.0320 |
| 10 | A | YGW18 | V | 0.06 | 0.50 | 1.53 | 0.012 | 0.006 | 0.009 | 0.019 | 0.029 | 0.002 | 0.002 | 0.002 | 0.004 | 0.106 | 0.002 | 0.002 | 0.002 | 0.002 | 0.0015 | 0.0015 | 0.0341 |
| 11 | A | YGW18 | V | 0.06 | 0.47 | 1.54 | 0.012 | 0.007 | 0.012 | 0.025 | 0.033 | 0.003 | 0.001 | 0.001 | 0.003 | 0.093 | 0.001 | 0.001 | 0.001 | 0.001 | 0.0013 | 0.0013 | 0.0299 |
| 12 | A | G 59J A 1 | V | 0.06 | 0.48 | 1.39 | 0.012 | 0.007 | 0.012 | 0.025 | 0.032 | 0.003 | 0.001 | 0.001 | 0.003 | 0.094 | 0.001 | 0.001 | 0.001 | 0.001 | 0.0013 | 0.0013 | 0.0302 |
| 13 | A | G 59J A 1 | V | 0.06 | 0.50 | 1.39 | 0.012 | 0.006 | 0.010 | 0.020 | 0.030 | 0.002 | 0.001 | 0.001 | 0.004 | 0.104 | 0.001 | 0.001 | 0.001 | 0.001 | 0.0015 | 0.0015 | 0.0334 |
| 14 | A | G 59J A 1 | V | 0.06 | 0.49 | 1.39 | 0.012 | 0.006 | 0.010 | 0.022 | 0.031 | 0.003 | 0.001 | 0.001 | 0.004 | 0.100 | 0.001 | 0.001 | 0.001 | 0.001 | 0.0014 | 0.0014 | 0.0320 |
| 14-2 | A | G 59J A 1 | V | 0.06 | 0.48 | 1.40 | 0.012 | 0.006 | 0.010 | 0.021 | 0.031 | 0.003 | 0.001 | 0.001 | 0.003 | 0.100 | 0.001 | 0.001 | 0.001 | 0.001 | 0.0015 | 0.0015 | 0.0318 |
| 15 | A | G 59J A 1 | V | 0.07 | 0.46 | 1.39 | 0.013 | 0.007 | 0.013 | 0.029 | 0.034 | 0.003 | 0.001 | 0.001 | 0.003 | 0.086 | 0.001 | 0.001 | 0.001 | 0.001 | 0.0012 | 0.0012 | 0.0278 |
| 16 | A | G 59J A 1 | V | 0.06 | 0.54 | 1.40 | 0.011 | 0.006 | 0.006 | 0.011 | 0.025 | 0.002 | 0.002 | 0.002 | 0.004 | 0.121 | 0.002 | 0.002 | 0.002 | 0.002 | 0.0017 | 0.0017 | 0.0389 |
| 17 | A | G 59J A 1 | V | 0.07 | 0.42 | 1.38 | 0.013 | 0.007 | 0.017 | 0.038 | 0.039 | 0.003 | 0.001 | 0.001 | 0.002 | 0.069 | 0.001 | 0.001 | 0.001 | 0.001 | 0.0010 | 0.0010 | 0.0221 |
| 18 | B | YGW18 | X | 0.05 | 0.55 | 1.59 | 0.011 | 0.006 | 0.020 | 0.010 | 0.034 | 0.002 | 0.002 | 0.001 | 0.004 | 0.105 | 0.001 | 0.001 | 0.001 | 0.001 | 0.0015 | 0.0015 | 0.0337 |
| 19 | B | YGW18 | X | 0.05 | 0.56 | 1.56 | 0.011 | 0.006 | 0.012 | 0.006 | 0.028 | 0.002 | 0.003 | 0.002 | 0.004 | 0.121 | 0.002 | 0.002 | 0.002 | 0.002 | 0.0017 | 0.0017 | 0.0390 |
| 20 | B | YGW18 | X | 0.05 | 0.56 | 1.57 | 0.011 | 0.006 | 0.015 | 0.008 | 0.030 | 0.002 | 0.002 | 0.002 | 0.004 | 0.115 | 0.002 | 0.002 | 0.002 | 0.002 | 0.0016 | 0.0016 | 0.0370 |
| 21 | C | YGW18 | X | 0.07 | 0.43 | 1.50 | 0.010 | 0.009 | 0.038 | 0.037 | 0.031 | 0.004 | 0.001 | 0.001 | 0.002 | 0.069 | 0.001 | 0.001 | 0.001 | 0.001 | 0.0010 | 0.0010 | 0.0222 |
| 22 | D | YGW18 | X | 0.05 | 0.56 | 1.60 | 0.011 | 0.005 | 0.010 | 0.009 | 0.028 | 0.002 | 0.244 | 0.002 | 0.004 | 0.121 | 0.002 | 0.002 | 0.002 | 0.002 | 0.0017 | 0.0017 | 0.0388 |
| 22-2 | D | G 59J A 1 | X | 0.08 | 0.43 | 1.40 | 0.012 | 0.006 | 0.013 | 0.021 | 0.023 | 0.008 | 0.865 | 0.002 | 0.003 | 0.067 | 0.002 | 0.002 | 0.002 | 0.002 | 0.0010 | 0.0012 | 0.0256 |
| 23 | E | YGW18 | X | 0.07 | 0.56 | 1.43 | 0.012 | 0.005 | 0.012 | 0.009 | 0.029 | 0.002 | 0.002 | 0.277 | 0.004 | 0.110 | 0.002 | 0.002 | 0.002 | 0.002 | 0.0016 | 0.0016 | 0.0354 |
| 23-2 | E | G 59J A 1 | X | 0.06 | 0.54 | 1.39 | 0.012 | 0.005 | 0.012 | 0.008 | 0.026 | 0.003 | 0.002 | 0.931 | 0.005 | 0.090 | 0.003 | 0.003 | 0.002 | 0.002 | 0.0016 | 0.0013 | 0.0227 |
| 24 | F | YGW18 | X | 0.06 | 0.54 | 1.41 | 0.011 | 0.007 | 0.012 | 0.014 | 0.023 | 0.003 | 0.002 | 0.002 | 0.073 | 0.114 | 0.002 | 0.002 | 0.002 | 0.002 | 0.0016 | 0.0016 | 0.0367 |
| 25 | G | YGW18 | X | 0.05 | 0.52 | 1.60 | 0.013 | 0.005 | 0.019 | 0.018 | 0.028 | 0.003 | 0.002 | 0.001 | 0.004 | 0.307 | 0.001 | 0.001 | 0.001 | 0.001 | 0.0015 | 0.0015 | 0.0329 |

*1: The remainder is composed of Fe and incidental impurities.

[Table 4-2]

| Joint No. | Steel grade | Wire steel type | Groove shape | C | Si | Mn | P | S | Nb | Al | O | N | Cu | Ni | Cr | Mo | Ti | V | B | W | Ca | Mg | REM |
|---|---|---|---|---|---|---|---|---|---|---|---|---|---|---|---|---|---|---|---|---|---|---|---|
| | | | | Chemical composition of weld metal (% by mass) *1 | | | | | | | | | | | | | | | | | | | |
| 26 | H | YGW18 | X | 0.06 | 0.53 | 1.59 | 0.009 | 0.004 | 0.019 | 0.008 | 0.035 | 0.004 | 0.001 | 0.001 | 0.004 | 0.101 | 0.019 | 0.001 | 0.001 | 0.001 | 0.0014 | 0.0014 | 0.0324 |
| 27 | I | YGW18 | X | 0.06 | 0.53 | 1.47 | 0.011 | 0.008 | 0.015 | 0.012 | 0.026 | 0.002 | 0.002 | 0.002 | 0.004 | 0.106 | 0.002 | 0.040 | 0.002 | 0.002 | 0.0015 | 0.0015 | 0.0342 |
| 27-2 | I | G 59J A 1 | X | 0.09 | 0.53 | 1.46 | 0.012 | 0.006 | 0.016 | 0.012 | 0.022 | 0.002 | 0.002 | 0.002 | 0.003 | 0.087 | 0.002 | 0.002 | 0.002 | 0.002 | 0.0016 | 0.0013 | 0.0337 |
| 28 | J | YGW18 | X | 0.09 | 0.43 | 1.44 | 0.011 | 0.013 | 0.016 | 0.028 | 0.031 | 0.004 | 0.001 | 0.001 | 0.003 | 0.074 | 0.001 | 0.001 | 0.005 | 0.001 | 0.0011 | 0.0011 | 0.0237 |
| 29 | K | YGW18 | X | 0.08 | 0.51 | 1.55 | 0.018 | 0.012 | 0.027 | 0.038 | 0.049 | 0.004 | 0.001 | 0.001 | 0.002 | 0.065 | 0.001 | 0.001 | 0.001 | 0.037 | 0.0009 | 0.0009 | 0.0210 |
| 30 | L | YGW18 | X | 0.07 | 0.52 | 1.41 | 0.013 | 0.005 | 0.009 | 0.019 | 0.024 | 0.003 | 0.001 | 0.001 | 0.004 | 0.100 | 0.001 | 0.001 | 0.001 | 0.001 | 0.0023 | 0.0014 | 0.0320 |
| 30-2 | L | G 59J A 1 | X | 0.06 | 0.53 | 1.43 | 0.012 | 0.006 | 0.012 | 0.012 | 0.023 | 0.002 | 0.002 | 0.003 | 0.002 | 0.099 | 0.001 | 0.002 | 0.001 | 0.001 | 0.0087 | 0.0020 | 0.0335 |
| 31 | M | YGW18 | X | 0.05 | 0.54 | 1.68 | 0.012 | 0.007 | 0.022 | 0.019 | 0.036 | 0.003 | 0.001 | 0.001 | 0.003 | 0.097 | 0.001 | 0.001 | 0.001 | 0.001 | 0.0014 | 0.0050 | 0.0313 |
| 31-2 | M | G 59J A 1 | X | 0.07 | 0.54 | 1.66 | 0.012 | 0.006 | 0.016 | 0.012 | 0.023 | 0.002 | 0.001 | 0.002 | 0.002 | 0.097 | 0.002 | 0.001 | 0.001 | 0.001 | 0.0011 | 0.0123 | 0.0323 |
| 32 | N | YGW18 | X | 0.05 | 0.57 | 1.59 | 0.011 | 0.006 | 0.026 | 0.017 | 0.031 | 0.002 | 0.001 | 0.001 | 0.004 | 0.098 | 0.001 | 0.001 | 0.001 | 0.001 | 0.0014 | 0.0014 | 0.0410 |
| 33 | O | YGW18 | X | 0.17 | 0.44 | 1.24 | 0.008 | 0.008 | 0.029 | 0.119 | 0.029 | 0.004 | 0.001 | 0.001 | 0.002 | 0.069 | 0.001 | 0.001 | 0.001 | 0.001 | 0.0010 | 0.0010 | 0.0221 |
| 34 | P | YGW18 | X | 0.06 | 0.55 | 1.65 | 0.033 | 0.007 | 0.010 | 0.033 | 0.046 | 0.003 | 0.001 | 0.001 | 0.003 | 0.083 | 0.001 | 0.001 | 0.001 | 0.001 | 0.0012 | 0.0012 | 0.0267 |
| 35 | Q | YGW18 | X | 0.06 | 0.48 | 1.28 | 0.013 | 0.021 | 0.015 | 0.037 | 0.020 | 0.002 | 0.001 | 0.001 | 0.003 | 0.084 | 0.001 | 0.001 | 0.001 | 0.001 | 0.0012 | 0.0012 | 0.0280 |
| 36 | R | YGW18 | X | 0.08 | 0.44 | 2.84 | 0.014 | 0.008 | 0.030 | 0.018 | 0.022 | 0.003 | 0.001 | 0.001 | 0.003 | 0.074 | 0.001 | 0.001 | 0.001 | 0.001 | 0.0011 | 0.0011 | 0.0237 |
| 37 | S | YGW18 | X | 0.07 | 0.94 | 1.56 | 0.014 | 0.005 | 0.110 | 0.022 | 0.033 | 0.004 | 0.001 | 0.001 | 0.003 | 0.089 | 0.001 | 0.001 | 0.001 | 0.001 | 0.0013 | 0.0013 | 0.0285 |
| 38 | A | YGW18 | V | 0.06 | 0.52 | 1.53 | 0.011 | 0.006 | 0.008 | 0.016 | 0.028 | 0.002 | 0.002 | 0.002 | 0.004 | 0.111 | 0.002 | 0.002 | 0.002 | 0.0016 | 0.0016 | 0.0016 | 0.0358 |
| 39 | A | YGW18 | V | 0.06 | 0.49 | 1.54 | 0.012 | 0.006 | 0.010 | 0.022 | 0.031 | 0.003 | 0.001 | 0.001 | 0.004 | 0.099 | 0.001 | 0.001 | 0.001 | 0.0014 | 0.0014 | 0.0014 | 0.0071 |
| 40 | A | YGW18 | V | 0.06 | 0.48 | 1.54 | 0.012 | 0.007 | 0.012 | 0.025 | 0.033 | 0.003 | 0.001 | 0.001 | 0.003 | 0.094 | 0.001 | 0.001 | 0.001 | 0.0013 | 0.0013 | 0.0013 | 0.0301 |
| 41 | A | YGW18 | V | 0.06 | 0.48 | 1.54 | 0.012 | 0.007 | 0.011 | 0.024 | 0.032 | 0.003 | 0.001 | 0.001 | 0.003 | 0.096 | 0.001 | 0.001 | 0.001 | 0.0014 | 0.0014 | 0.0014 | 0.0309 |
| 42 | A | YGW18 | V | 0.06 | 0.51 | 1.53 | 0.011 | 0.006 | 0.008 | 0.017 | 0.028 | 0.002 | 0.002 | 0.002 | 0.004 | 0.109 | 0.002 | 0.002 | 0.002 | 0.0016 | 0.0016 | 0.0016 | 0.0351 |
| 43 | A | YGW18 | V | 0.06 | 0.44 | 1.51 | 0.012 | 0.006 | 0.010 | 0.009 | 0.030 | 0.003 | 0.001 | 0.001 | 0.003 | 0.089 | 0.001 | 0.001 | 0.002 | 0.0015 | 0.0016 | 0.0016 | 0.0328 |
| 44 | A | YGW18 | V | 0.07 | 0.46 | 1.54 | 0.012 | 0.007 | 0.013 | 0.028 | 0.034 | 0.003 | 0.001 | 0.001 | 0.003 | 0.087 | 0.001 | 0.001 | 0.001 | 0.0012 | 0.0012 | 0.0012 | 0.0280 |
| 45 | A | YGW18 | V | 0.06 | 0.48 | 1.54 | 0.012 | 0.007 | 0.012 | 0.025 | 0.033 | 0.003 | 0.001 | 0.001 | 0.003 | 0.093 | 0.001 | 0.001 | 0.001 | 0.0013 | 0.0013 | 0.0013 | 0.0300 |
| 46 | A | YGW18 | V | 0.06 | 0.52 | 1.53 | 0.011 | 0.006 | 0.008 | 0.016 | 0.027 | 0.002 | 0.002 | 0.002 | 0.004 | 0.113 | 0.002 | 0.002 | 0.002 | 0.0016 | 0.0016 | 0.0016 | 0.0362 |
| 47 | A | YGW18 | V | 0.06 | 0.49 | 1.54 | 0.012 | 0.006 | 0.010 | 0.021 | 0.030 | 0.003 | 0.001 | 0.001 | 0.004 | 0.102 | 0.001 | 0.001 | 0.001 | 0.0015 | 0.0015 | 0.0015 | 0.0327 |
| 48 | A | YGW18 | V | 0.06 | 0.47 | 1.54 | 0.012 | 0.007 | 0.012 | 0.026 | 0.033 | 0.003 | 0.001 | 0.001 | 0.003 | 0.091 | 0.001 | 0.001 | 0.001 | 0.0013 | 0.0013 | 0.0013 | 0.0294 |
| 49 | A | YGW18 | V | 0.06 | 0.50 | 1.54 | 0.012 | 0.006 | 0.010 | 0.020 | 0.030 | 0.003 | 0.001 | 0.001 | 0.004 | 0.103 | 0.001 | 0.001 | 0.001 | 0.0015 | 0.0015 | 0.0015 | 0.0331 |
| 50 | A | YGW18 | V | 0.06 | 0.48 | 1.54 | 0.012 | 0.007 | 0.011 | 0.024 | 0.032 | 0.003 | 0.001 | 0.001 | 0.003 | 0.096 | 0.001 | 0.001 | 0.001 | 0.0014 | 0.0014 | 0.0014 | 0.0310 |
| 51 | A | YGW18 | V | 0.07 | 0.42 | 1.55 | 0.013 | 0.007 | 0.017 | 0.037 | 0.039 | 0.003 | 0.001 | 0.001 | 0.003 | 0.071 | 0.001 | 0.001 | 0.001 | 0.0010 | 0.0010 | 0.0010 | 0.0227 |

*1: The remainder is composed of Fe and incidental impurities.

[Table 5-1]

| Joint No. | Steel grade | Wire steel type | Groove shape | Thickness T (mm) | Gap G (mm) | Front surface groove angle θ (degree) | Width W of weld metal excluding first layer and outermost surface layer (mm) Minimum value | Width W ... Maximum value | Ratio A/p of cross-sectional area A of weld metal to number of weld layers p (mm²/layer) | Ratio p/T of number of weld layers p to thickness T (layer/mm) | Dislocation density ρ at 1 mm below surface (10¹⁴m⁻²) | Average grain size at 1 mm below steel sheet surface (μm) | Average grain size at mid-thickness position (μm) | Radiographic test results | Room-temperature yield stress of weld metal | Room-temperature tensile strength of weld metal | Room-temperature tensile strength of welded joint | Charpy absorbed energy of weld metal at -40°C | Charpy absorbed energy at fusion line at -40°C | Charpy absorbed energy at fusion line +1 mm at -40°C | Deposition rate |
|---|---|---|---|---|---|---|---|---|---|---|---|---|---|---|---|---|---|---|---|---|---|
| 1 | A | YGW18 | V | 50 | 6 | 10 | 6.1 | 12.7 | 46.6 | 0.14 | 0.5 | 6.7 | 9.9 | ○ | ○ | ○ | ○ | ○ | ○ | ○ | ○ |
| 2 | A | YGW18 | V | 100 | 6 | 10 | 5.7 | 23.5 | 54.2 | 0.22 | 0.5 | 6.7 | 9.9 | ○ | ○ | ○ | ○ | ○ | ○ | ○ | ○ |
| 3 | A | YGW18 | V | 100 | 6 | 10 | 7.2 | 23.9 | 75.0 | 0.19 | 0.5 | 6.7 | 9.9 | ○ | ○ | ○ | ○ | ○ | ○ | ○ | ○ |
| 4 | A | YGW18 | V | 100 | 6 | 10 | 9.3 | 22.6 | 101.1 | 0.13 | 0.5 | 6.7 | 9.9 | ○ | ○ | ○ | ○ | ○ | ○ | ○ | ○ |
| 5 | A | YGW18 | V | 100 | 6 | 10 | 6.0 | 24.8 | 77.8 | 0.19 | 0.5 | 6.7 | 9.9 | ○ | ○ | ○ | ○ | ○ | ○ | ○ | ○ |
| 6 | A | YGW18 | V | 100 | 6 | 10 | 6.9 | 27.1 | 85.1 | 0.20 | 0.5 | 6.7 | 9.9 | ○ | ○ | ○ | ○ | ○ | ○ | ○ | ○ |
| 6-2 | A | YGW18 | V | 100 | 6 | 10 | 7.1 | 29.5 | 90.2 | 0.21 | 0.5 | 6.7 | 9.9 | ○ | ○ | ○ | ○ | ○ | ○ | ○ | ○ |
| 6-3 | A | YGW18 | V | 100 | 6 | 10 | 7.3 | 28.9 | 86.7 | 0.20 | 0.5 | 6.7 | 9.9 | ○ | ○ | ○ | ○ | ○ | ○ | ○ | ○ |
| 7 | A | YGW18 | V | 100 | 6 | 10 | 7.2 | 20.7 | 65.1 | 0.19 | 0.5 | 6.7 | 9.9 | ○ | ○ | ○ | ○ | ○ | ○ | ○ | ○ |
| 8 | A | YGW18 | V | 100 | 6 | 10 | 5.5 | 33.0 | 72.1 | 0.16 | 0.5 | 6.7 | 9.9 | ○ | ○ | ○ | ○ | ○ | ○ | ○ | ○ |
| 9 | A | YGW18 | V | 100 | 6 | 10 | 5.9 | 21.4 | 67.3 | 0.19 | 0.5 | 6.7 | 9.9 | ○ | ○ | ○ | ○ | ○ | ○ | ○ | ○ |
| 10 | A | YGW18 | V | 100 | 6 | 10 | 5.1 | 24.9 | 51.9 | 0.30 | 0.5 | 6.7 | 9.9 | ○ | ○ | ○ | ○ | ○ | ○ | ○ | ○ |
| 11 | A | YGW18 | V | 100 | 6 | 10 | 6.2 | 24.5 | 76.9 | 0.18 | 0.5 | 6.7 | 9.9 | ○ | ○ | ○ | ○ | ○ | ○ | ○ | ○ |
| 12 | A | G 59J A 1 | V | 100 | 6 | 10 | 7.9 | 25.0 | 78.5 | 0.19 | 0.5 | 6.7 | 9.9 | ○ | ○ | ○ | ○ | ○ | ○ | ○ | ○ |
| 13 | A | G 59J A 1 | V | 100 | 6 | 10 | 6.7 | 32.9 | 71.9 | 0.20 | 0.5 | 6.7 | 9.9 | ○ | ○ | ○ | ○ | ○ | ○ | ○ | ○ |
| 14 | A | G 59J A 1 | V | 100 | 6 | 10 | 5.8 | 21.3 | 66.8 | 0.20 | 0.5 | 6.7 | 9.9 | ○ | ○ | ○ | ○ | ○ | ○ | ○ | ○ |
| 14-2 | A | G 59J A 1 | V | 100 | 6 | 10 | 5.2 | 18.5 | 53.1 | 0.27 | 0.5 | 6.7 | 9.9 | × | ○ | ○ | ○ | ○ | × | ○ | ○ |
| 15 | A | G 59J A 1 | V | 100 | 6 | 10 | 6.6 | 23.5 | 73.6 | 0.16 | 0.5 | 6.7 | 9.9 | ○ | ○ | ○ | ○ | ○ | ○ | ○ | ○ |
| 16 | A | G 59J A 1 | V | 100 | 6 | 10 | 7.0 | 26.4 | 82.9 | 0.19 | 0.5 | 6.7 | 9.9 | ○ | ○ | ○ | ○ | ○ | ○ | ○ | ○ |
| 17 | A | G 59J A 1 | V | 150 | 6 | 10 | 6.5 | 32.2 | 50.7 | 0.32 | 0.5 | 6.7 | 9.9 | ○ | ○ | ○ | ○ | ○ | ○ | ○ | ○ |
| 18 | B | YGW18 | X | 50 | 6 | 10 | 7.0 | 12.6 | 68.3 | 0.10 | 2.5 | 10.5 | 13.4 | ○ | ○ | ○ | ○ | ○ | ○ | ○ | ○ |
| 19 | B | YGW18 | X | 100 | 6 | 10 | 6.6 | 24.5 | 68.3 | 0.15 | 2.5 | 10.5 | 13.4 | ○ | ○ | ○ | ○ | ○ | ○ | ○ | ○ |
| 20 | B | YGW18 | X | 150 | 8 | 10 | 6.9 | 33.3 | 66.1 | 0.21 | 2.5 | 10.5 | 13.4 | ○ | ○ | ○ | ○ | ○ | ○ | ○ | ○ |
| 21 | C | YGW18 | X | 100 | 6 | 10 | 6.7 | 19.5 | 70.6 | 0.17 | 2.9 | 5.9 | 4.1 | ○ | ○ | ○ | ○ | ○ | ○ | ○ | ○ |
| 22 | D | YGW18 | X | 100 | 6 | 10 | 7.3 | 20.3 | 73.2 | 0.17 | 2.3 | 5.8 | 11.0 | ○ | ○ | ○ | ○ | ○ | ○ | ○ | ○ |
| 22-2 | D | G 59J A 1 | X | 100 | 6 | 10 | 7.6 | 21.7 | 71.6 | 0.17 | 2.3 | 5.8 | 11.0 | ○ | ○ | ○ | ○ | ○ | ○ | ○ | ○ |
| 23 | E | YGW18 | X | 100 | 6 | 10 | 7.4 | 21.3 | 73.3 | 0.15 | 2.1 | 7.2 | 6.9 | ○ | ○ | ○ | ○ | ○ | ○ | ○ | ○ |
| 23-2 | E | G 59J A 1 | X | 100 | 6 | 10 | 7.5 | 21.8 | 73.5 | 0.15 | 2.1 | 7.2 | 6.9 | ○ | ○ | ○ | ○ | ○ | ○ | ○ | ○ |
| 24 | F | YGW18 | X | 100 | 6 | 10 | 5.9 | 19.1 | 60.6 | 0.16 | 3.0 | 5.1 | 8.4 | ○ | ○ | ○ | ○ | ○ | ○ | ○ | ○ |
| 25 | G | YGW18 | X | 100 | 6 | 10 | 6.1 | 20.9 | 66.5 | 0.17 | 2.0 | 5.1 | 10.8 | ○ | ○ | ○ | ○ | ○ | ○ | ○ | ○ |

[Table 5-2]

| Joint No. | Steel grade | Wire steel type | Groove conditions | | | | Weld metal characteristics | | | | Steel sheet characteristics | | | Performance of joint | | | | | | | |
|---|---|---|---|---|---|---|---|---|---|---|---|---|---|---|---|---|---|---|---|---|---|
| | | | Groove shape | Thickness T (mm) | Gap G (mm) | Front surface groove angle θ (degree) | Width W of weld metal excluding first layer and outermost surface layer (mm) | | Ratio A/p of cross-sectional area A of weld metal to number of weld layers p (mm²/layer) | Ratio p/T of number of weld layers p to thickness T (layer/mm) | Dislocation density ρ at 1 mm below surface ($10^{14}$m⁻²) | Average grain size at 1 mm below steel sheet surface (μm) | Average grain size at mid-thickness position (μm) | Radiographic test results | Room-temperature yield stress of weld metal | Room-temperature tensile strength of weld metal | Room-temperature tensile strength of welded joint | Charpy absorbed energy of weld metal at -40°C | Charpy absorbed energy at fusion line at -40°C | Charpy absorbed energy at fusion line + 1 mm at -40°C | Deposition rate |
| | | | | | | | Minimum value | Maximum value | | | | | | | | | | | | | |
| 26 | H | YGW18 | X | 100 | 6 | 10 | 7.9 | 21.6 | 62.6 | 0.16 | 1.3 | 11.6 | 11.1 | ○ | ○ | ○ | ○ | ○ | ○ | ○ | ○ |
| 27 | I | YGW18 | X | 100 | 6 | 10 | 7.5 | 20.3 | 68.0 | 0.17 | 1.3 | 8.1 | 13.2 | ○ | ○ | ○ | ○ | ○ | ○ | ○ | ○ |
| 27-2 | I | G 59J A 1 | X | 100 | 6 | 10 | 7.5 | 21.0 | 67.5 | 0.17 | 1.3 | 8.1 | 13.2 | ○ | ○ | ○ | ○ | ○ | ○ | ○ | ○ |
| 28 | J | YCW18 | X | 100 | 6 | 10 | 7.0 | 21.0 | 63.5 | 0.13 | 1.6 | 12.0 | 9.9 | ○ | ○ | ○ | ○ | ○ | ○ | ○ | ○ |
| 29 | K | YGW18 | X | 100 | 6 | 10 | 6.6 | 20.8 | 61.0 | 0.16 | 3.0 | 8.5 | 9.4 | ○ | ○ | ○ | ○ | ○ | ○ | ○ | ○ |
| 30 | L | YGW18 | X | 100 | 6 | 10 | 6.4 | 19.5 | 63.5 | 0.16 | 1.5 | 5.7 | 7.9 | ○ | ○ | ○ | ○ | ○ | ○ | ○ | ○ |
| 30-2 | L | G 59J A 1 | X | 100 | 6 | 10 | 6.5 | 19.4 | 63.4 | 0.16 | 1.5 | 5.7 | 7.9 | ○ | ○ | ○ | ○ | ○ | ○ | ○ | ○ |
| 31 | M | YGW18 | X | 100 | 6 | 10 | 5.8 | 20.7 | 68.1 | 0.15 | 1.2 | 3.4 | 5.2 | ○ | ○ | ○ | ○ | ○ | ○ | ○ | ○ |
| 31-2 | M | G 59J A 1 | X | 100 | 6 | 10 | 5.8 | 20.1 | 67.2 | 0.15 | 1.2 | 3.4 | 5.2 | ○ | ○ | ○ | ○ | ○ | ○ | ○ | ○ |
| 32 | N | YGW18 | X | 100 | 6 | 10 | 7.3 | 20.3 | 70.8 | 0.16 | 1.9 | 8.5 | 6.9 | ○ | ○ | ○ | ○ | ○ | ○ | ○ | ○ |
| 33 | O | YGW18 | X | 100 | 6 | 10 | 5.1 | 21.3 | 68.2 | 0.15 | 1.4 | 9.8 | 8.3 | △ | ○ | ○ | ○ | × | × | × | ○ |
| 34 | P | YGW18 | X | 100 | 6 | 10 | 7.5 | 20.3 | 72.2 | 0.16 | 1.8 | 8.3 | 0.8 | △ | ○ | ○ | ○ | × | × | × | ○ |
| 35 | Q | YGW18 | X | 100 | 6 | 10 | 7.7 | 20.9 | 63.3 | 0.15 | 0.9 | 7.3 | 11.6 | △ | ○ | ○ | ○ | × | × | × | ○ |
| 36 | R | YGW18 | X | 100 | 6 | 10 | 5.1 | 20.3 | 70.2 | 0.16 | 2.2 | 5.7 | 12.3 | △ | ○ | ○ | × | ○ | ○ | ○ | × |
| 37 | S | YGW18 | X | 100 | 6 | 10 | 5.3 | 19.4 | 72.9 | 0.14 | 1.7 | 10.3 | 6.4 | △ | ○ | ○ | × | ○ | ○ | ○ | × |
| 38 | A | YGW18 | V | 100 | 6 | 10 | 7.0 | 21.0 | 71.6 | 0.21 | 0.5 | 6.7 | 9.9 | × | ○ | ○ | ○ | ○ | ○ | ○ | ○ |
| 39 | A | YGW18 | V | 100 | 6 | 10 | 6.2 | 23.6 | 73.6 | 0.20 | 0.5 | 6.7 | 9.9 | × | ○ | ○ | ○ | ○ | ○ | ○ | × |
| 40 | A | YGW18 | V | 100 | 6 | 10 | 5.5 | 24.5 | 79.3 | 0.20 | 0.5 | 6.7 | 9.9 | △ | ○ | ○ | ○ | ○ | ○ | ○ | × |
| 41 | A | YGW18 | V | 100 | 6 | 10 | 5.5 | 23.1 | 70.6 | 0.18 | 0.5 | 6.7 | 9.9 | △ | ○ | ○ | ○ | ○ | ○ | ○ | × |
| 42 | A | YGW18 | V | 100 | 6 | 10 | 8.2 | 23.9 | 79.0 | 0.18 | 0.5 | 6.7 | 9.9 | △ | ○ | ○ | ○ | ○ | ○ | ○ | × |
| 43 | A | YGW18 | V | 100 | 6 | 10 | - | - | - | - | 0.5 | 6.7 | 9.9 | - | - | - | - | - | - | - | could not be welded |
| 44 | A | YGW18 | V | 100 | 6 | 10 | 7.6 | 22.8 | 68.2 | 0.18 | 0.5 | 6.7 | 9.9 | × | ○ | ○ | ○ | ○ | ○ | ○ | ○ |
| 45 | A | YGW18 | V | 100 | 6 | 10 | 6.5 | 23.5 | 74.8 | 0.18 | 0.5 | 6.7 | 9.9 | × | ○ | ○ | ○ | ○ | ○ | ○ | ○ |
| 46 | A | YGW18 | V | 100 | 6 | 10 | 7.2 | 25.3 | 70.5 | 0.18 | 0.5 | 6.7 | 9.9 | × | ○ | ○ | ○ | ○ | ○ | ○ | ○ |
| 47 | A | YGW18 | V | 100 | 6 | 10 | 5.6 | 22.5 | 73.9 | 0.19 | 0.5 | 6.7 | 9.9 | △ | ○ | ○ | ○ | ○ | ○ | ○ | ○ |
| 48 | A | YGW18 | V | 100 | 0 | 4 | 0.9 | 7.9 | 56.9 | 0.18 | 0.5 | 6.7 | 9.9 | × | ○ | ○ | ○ | ○ | ○ | ○ | × |
| 49 | A | YGW18 | V | 100 | 10 | 20 | 5.8 | 46.9 | 72.6 | 0.18 | 0.5 | 6.7 | 9.9 | ○ | ○ | ○ | ○ | ○ | ○ | ○ | × |
| 50 | A | YGW18 | V | 100 | 6 | 10 | 8.5 | 38.4 | 164.2 | 0.19 | 0.5 | 6.7 | 9.9 | ○ | ○ | ○ | ○ | × | × | × | ○ |
| 51 | A | YGW18 | V | 100 | 6 | 10 | 4.7 | 23.8 | 23.8 | 0.62 | 0.5 | 6.7 | 9.9 | ○ | ○ | ○ | ○ | ○ | ○ | ○ | × |

All the examples of the present invention are sound welded joints without welding defects, such as hot cracking and incomplete fusion. Furthermore, in all the examples of the present invention, the weld metals have a room-temperature yield strength (0.2% proof strength) of 325 MPa or more and a tensile strength of 520 MPa or more, and the welded joints have a room-temperature tensile strength of 520 MPa or more. The weld metals and the weld heat-affected zones have absorbed energy ($vE_{-40}$) of 30 J or more in the Charpy impact test at the test temperature of -40°C, and the welded joints have the weld metals with high strength and low-temperature impact toughness.

On the other hand, examples out of suitable ranges as a steel plate and a welded weld metal to which the present invention is applied have hot cracking and lower hot cracking resistance or incomplete fusion. Furthermore, they had a slight decrease in any of the mechanical properties, such as the room-temperature yield strength (0.2% proof strength) and tensile strength of the weld metal, the room-temperature tensile strength of the welded joint, and the absorbed energy ($vE_{-40}$) of the Charpy impact test at the test temperature of -40°C of the weld metal and the weld heat-affected zone.

Reference Signs List

1 steel plate
2 weld metal
3 fusion line
4 groove face
5 first electrode
6 second electrode
7 third electrode
8 fourth electrode
5a, 6a, 7a, 8a contact tips for first, second, third, and fourth electrodes
5b, 6b, 7b, 8b welding wires of first, second, third, and fourth electrodes
5c, 6c, 7c, 8c welding wire tips of first, second, third, and fourth electrodes
9 weld line
10 backing material
11 shielding gas supply nozzle
11a gas outlet
12 molten pool
T plate thickness
A cross-sectional area of entire weld metal

$L_i$ weld layer (i = 1 to p layers), ($L_1$: first layer, $L_P$: outermost surface layer)

$W_i$ width of weld layer (i = 1 to p layers)

a distance between welding wire tip 5c of first electrode and welding wire tip 6c of second electrode

b distance between welding wire tip 6c of second electrode and welding wire tip 7c of third electrode

c distance between welding wire tip 7c of third electrode and welding wire tip 8c of fourth electrode

d distance between welding wire tip end portion 5c or 6c and groove face 4

$\alpha$ angle of straight line connecting welding wire tips of first electrode and second electrode relative to direction perpendicular to weld line

$\theta$ groove angle, $\theta_f$ front surface groove angle, $\theta_b$ back surface groove angle

$\Phi$ inclination angle of contact tip front end

G gap

$T_f$ front surface thickness, $T_m$ intermediate thickness, $T_b$ back surface thickness

**Claims**

1. A method for producing a welded joint by gas-shielded arc welding of a steel plate, wherein

    the steel plate has a thickness T (mm) in the range of 50 to 160 mm,
    a weld metal is composed of three or more layers,
    each layer excluding a first layer and an outermost surface layer of the weld metal has a width W (mm) of 5.0 or more and 0.4T or less (mm),
    a ratio [A/p] of a cross-sectional area A ($mm^2$) of the weld metal in a direction perpendicular to a weld line to a number of weld layers p (layers) is 120.0 $mm^2$/layer or less,
    a ratio [p/T] of the number of weld layers p to the thickness T is 0.40 layers/mm or less,
    the gas-shielded arc welding is multiple electrode welding with three or more electrodes,
    each welding wire tip of a first electrode and a second electrode is disposed on two distinct weld lines that are parallel to each other,
    one of the first electrode and the second electrode is set to wire negative (positive polarity), and the other is set to wire positive (reverse polarity),
    a distance a (mm) between the welding wire tips of the first electrode and the second electrode ranges from 5 to 16 mm,
    a straight line connecting each welding wire tip of the first electrode and the second electrode has an angle $\alpha$ of 60 degrees or less relative to the direction perpendicular to the weld line, and
    a welding wire containing 0.015% to 0.100% by mass of REM is used for the electrode set to wire negative (positive polarity).

2. The method for producing a welded joint by gas-shielded arc welding of a steel plate according to Claim 1, wherein

    each contact tip front end of the first electrode and the second electrode has an inclination angle $\Phi$ in the range of 0 degrees to 15 degrees toward a groove face relative to the direction perpendicular to the weld line,
    a distance d (mm) between a side end portion of each welding wire tip of the first electrode and the second electrode and the groove face ranges from 0.5 to 3.0 mm,
    each welding wire is a welding wire curved in advance at a radius of curvature in the range of 150 to 300 mm,
    third and subsequent electrodes are disposed at a center of a groove behind the first electrode and the second electrode, and
    a gas containing 60% by volume or more of $CO_2$ gas is used as a shielding gas.

3. The method for producing a welded joint by gas-shielded arc welding of a steel plate according to Claim 1 or 2, wherein

    the steel plate has a chemical composition containing, on a mass percent basis,
    C: 0.04% to 0.14%,
    Si: 0.03% to 0.70%,
    Mn: 0.30% to 2.50%,
    P: 0.030% or less,
    S: 0.020% or less,
    Nb: 0.001% to 0.100%,
    Al: 0.001% to 0.100%,

O: 0.0100% or less, and
N: 0.0100% or less,
the remainder being Fe and incidental impurities,
Ceq defined by the following formula (1) and a thickness (T) satisfy

$$0.0004T + 0.25 \leq Ceq \leq 0.0004T + 0.45,$$

and a dislocation density $\rho$ at a position 1 mm below a surface of the steel plate is $4.0 \times 10^{14}$ m$^{-2}$ or less, an average grain size at the position 1 mm below the surface of the steel plate is 15.0 $\mu$m or less, and an average grain size at a mid-thickness position is 20.0 $\mu$m or less,

Ceq = [C] + [Mn]/6 + ([Cr] + [Mo] + [V])/5 + ([Cu] + [Ni])/15     (1)

wherein each element symbol in the formula (1) denotes the corresponding element content (% by mass) and is 0 in the absence of the element.

**4.** The method for producing a welded joint by gas-shielded arc welding of a steel plate according to Claim 3, wherein

the steel plate has a chemical composition further containing, on a mass percent basis,
one or two or more selected from the group consisting of
Cu: 2.000% or less,
Ni: 2.500% or less,
Cr: 1.500% or less,
Mo: 1.000% or less,
Ti: 0.100% or less,
V: 0.300% or less,
B: 0.0100% or less,
W: 0.500% or less,
Ca: 0.0200% or less,
Mg: 0.0200% or less, and
REM: 0.0500% or less.

**5.** The method for producing a welded joint by gas-shielded arc welding of a steel plate according to Claim 1 or 2, wherein

the weld metal has a chemical composition containing, on a mass percent basis,
C: 0.04% to 0.14%,
Si: 0.03% to 0.70%,
Mn: 0.30% to 2.50%,
P: 0.030% or less,
S: 0.020% or less,
Nb: 0.001% to 0.100%,
Al: 0.001% to 0.100%,
Cu: 0.001% to 2.000%,
Ni: 0.001% to 2.500%,
Cr: 0.001% to 1.500%,
Mo: 0.001% to 1.000%,
Ti: 0.001% to 0.100%,
V: 0.001% to 0.300%,
B: 0.001% to 0.020%,
O: 0.050% or less, and
N: 0.010% or less,
the remainder being Fe and incidental impurities.

**6.** The method for producing a welded joint by gas-shielded arc welding of a steel plate according to Claim 3, wherein

the weld metal has a chemical composition containing, on a mass percent basis,
C: 0.04% to 0.14%,

Si: 0.03% to 0.70%,
Mn: 0.30% to 2.50%,
P: 0.030% or less,
S: 0.020% or less,
Nb: 0.001% to 0.100%,
Al: 0.001% to 0.100%,
Cu: 0.001% to 2.000%,
Ni: 0.001% to 2.500%,
Cr: 0.001% to 1.500%,
Mo: 0.001% to 1.000%,
Ti: 0.001% to 0.100%,
V: 0.001% to 0.300%,
B: 0.001% to 0.020%,
O: 0.050% or less, and
N: 0.010% or less,
the remainder being Fe and incidental impurities.

7. The method for producing a welded joint by gas-shielded arc welding of a steel plate according to Claim 4, wherein

the weld metal has a chemical composition containing, on a mass percent basis,
C: 0.04% to 0.14%,
Si: 0.03% to 0.70%,
Mn: 0.30% to 2.50%,
P: 0.030% or less,
S: 0.020% or less,
Nb: 0.001% to 0.100%,
Al: 0.001% to 0.100%,
Cu: 0.001% to 2.000%,
Ni: 0.001% to 2.500%,
Cr: 0.001% to 1.500%,
Mo: 0.001% to 1.000%,
Ti: 0.001% to 0.100%,
V: 0.001% to 0.300%,
B: 0.001% to 0.020%,
O: 0.050% or less, and
N: 0.010% or less,
the remainder being composed of Fe and incidental impurities.

8. The method for producing a welded joint by gas-shielded arc welding of a steel plate according to Claim 5, wherein

the weld metal has a chemical composition further containing, on a mass percent basis,
one or two or more selected from the group consisting of
W: 0.500% or less,
Ca: 0.0200% or less,
Mg: 0.0200% or less, and
REM: 0.0500% or less.

9. The method for producing a welded joint by gas-shielded arc welding of a steel plate according to Claim 6, wherein

the weld metal has a chemical composition further containing, on a mass percent basis,
one or two or more selected from the group consisting of
W: 0.500% or less,
Ca: 0.0200% or less,
Mg: 0.0200% or less, and
REM: 0.0500% or less.

10. The method for producing a welded joint by gas-shielded arc welding of a steel plate according to Claim 7, wherein

the weld metal has a chemical composition further containing, on a mass percent basis,
one or two or more selected from the group consisting of
W: 0.500% or less,
Ca: 0.0200% or less,
Mg: 0.0200% or less, and
REM: 0.0500% or less.

# FIG. 1

OUTERMOST SURFACE
LAYER (Lp)

$5.0 \ (mm) \leq Wi \ (\text{EXCLUDING 1 AND p}) \leq 0.4T \ (mm)$
$A/p \leq 120.0 \ (mm^2/\text{LAYER})$
$p/T \leq 0.40 \ (\text{LAYER/mm})$

# FIG. 2

# FIG. 3

# FIG. 4

WELDING DIRECTION

# FIG. 5

WELDING DIRECTION

# FIG. 6

(a)

(b)

# FIG. 7

WELDING
DIRECTION

# FIG. 8

WELDING
DIRECTION

## INTERNATIONAL SEARCH REPORT

| | International application No. |
|---|---|
| | **PCT/JP2024/012426** |

### A. CLASSIFICATION OF SUBJECT MATTER

**B23K 9/173**(2006.01)i; **B23K 9/00**(2006.01)i; **B23K 9/16**(2006.01)i; **B23K 9/23**(2006.01)i; **B23K 35/30**(2006.01)i; **C22C 38/00**(2006.01)i; **C22C 38/58**(2006.01)i
FI: B23K9/173 E; B23K9/00 109; B23K9/16 J; B23K9/173 A; B23K9/23 A; B23K35/30 320A; C22C38/00 301B; C22C38/58

According to International Patent Classification (IPC) or to both national classification and IPC

### B. FIELDS SEARCHED

Minimum documentation searched (classification system followed by classification symbols)

B23K9/173; B23K9/00; B23K9/16; B23K9/23; B23K35/30; C22C38/00; C22C38/58

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2015-223605 A (JFE STEEL CORP.) 14 December 2015 (2015-12-14) entire text, all drawings | 1-10 |
| A | JP 8-257752 A (KAWASAKI STEEL CORP.) 08 October 1996 (1996-10-08) entire text, all drawings | 1-10 |
| A | JP 2011-200920 A (IHI CORP.) 13 October 2011 (2011-10-13) entire text, all drawings | 1-10 |
| A | JP 55-84278 A (NIPPON STEEL CORP.) 25 June 1980 (1980-06-25) entire text, all drawings | 1-10 |
| A | WO 2021/054344 A1 (JFE STEEL CORP.) 25 March 2021 (2021-03-25) entire text, all drawings | 1-10 |

☐ Further documents are listed in the continuation of Box C.    ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **23 May 2024** | **04 June 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

44

**INTERNATIONAL SEARCH REPORT**
Information on patent family members

International application No.

**PCT/JP2024/012426**

| Patent document cited in search report | | | Publication date (day/month/year) | Patent family member(s) | | | Publication date (day/month/year) |
|---|---|---|---|---|---|---|---|
| JP | 2015-223605 | A | 14 December 2015 | (Family: none) | | | |
| JP | 8-257752 | A | 08 October 1996 | (Family: none) | | | |
| JP | 2011-200920 | A | 13 October 2011 | (Family: none) | | | |
| JP | 55-84278 | A | 25 June 1980 | (Family: none) | | | |
| WO | 2021/054344 | A1 | 25 March 2021 | EP | 4032992 | A1 | |
| | | | | entire text, all drawings | | | |
| | | | | CN | 114402089 | A | |
| | | | | KR 10-2022-0047363 | | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4673710 B
- JP 2006212676 A
- JP 2021126696 A
- WO 2013073565 A
- JP 6137053 B